# EUROPÄISCHE PATENTANMELDUNG

(11) **EP 4 836 211 A1**
(43) Veröffentlichungstag der Anmeldung: **04.11.2026**
(21) Anmeldenummer: 25173668.2
(22) Anmeldetag: 30.04.2025
(51) Int. Cl.: H02G 1/12

(54) **BEARBEITUNGSKOPF ZUR BEARBEITUNG EINES KABELS**

(71) Anmelder: Schleuniger AG, 3608 Thun (CH)
(72) Erfinder: Deschler, Raphael, 3653 Oberhofen (CH); Hofer, Reto, 3705 Faulensee (CH)
(74) Vertreter: Zimmermann & Partner Patentanwälte mbB

(57) **Zusammenfassung**

Die Erfindung betrifft einen rotativen Bearbeitungskopf (300) zur Bearbeitung von einem Kabel. Der Bearbeitungskopf (300) kann eine um eine Rotationsachse (Z) rotierbare Rotorbasis (20), einen Kabelbearbeitungsraum (21), mehrere erste Werkzeuge (31), mehrere von den ersten Werkzeugen (31) verschiedenartige zweite Werkzeuge (32), ein drehbares Stellmittel (50) und einen Verstellmechanismus (200) mit ersten Pleueln (61) und zweiten Pleueln (62) aufweisen. Die Pleuel (61, 62) können kinematisch zwischen dem Stellmittel (50) und den jeweiligen Werkzeugen (31, 32) angeordnet sein, und derart ausgebildet und angeordnet sein, um die Drehbewegung des Stellmittels (50) relativ zur Rotorbasis (20) in jeweilige Linearbewegungen der Werkzeuge (31, 32) in Wirkrichtung der jeweiligen Linearführungen (17) zu übertragen, so dass die ersten Werkzeuge (31) gemäß den jeweiligen ersten Linearbewegungen und gleichzeitig die zweiten Werkzeuge (32) gemäß den jeweiligen zweiten Linearbewegungen durch das Stellmittel (50) bewegbar sind, wenn das Stellmittel (50) die Drehbewegung relativ zur Rotorbasis (20) ausführt.

## Beschreibung

Die Erfindung betrifft einen Bearbeitungskopf zur Bearbeitung von einem Kabel.

Kabel können unterschiedlich bearbeitet werden. Beispielsweise können sie abisoliert werden. Beispielsweise können einzelne Schichte des Kabels oder das Kabel eingeschnitten und/oder durchgeschnitten werden. Eine Vielzahl an Bearbeitungsschritten können nacheinander am Kabel durchgeführt werden. Die Vielzahl der Bearbeitungsschritte kann von unterschiedlichen Werkzeugen ausgeführt werden.

Die Aufgabe der vorliegenden Erfindung ist es, die Bearbeitung von Kabeln zu vereinfachen und die Präzision zu erhöhen.

Gelöst wird diese Aufgabe durch einen Bearbeitungskopf gemäß Anspruch 1, ein Kabelbearbeitungsvorrichtung gemäß Anspruch 14 sowie ein Verfahren nach Anspruch 15. Vorteilhafte Ausgestaltungen sind in den Unteransprüchen angegeben.

Ein erster Aspekt betrifft einen rotativen Bearbeitungskopf zur Bearbeitung von einem Kabel. Der rotative Bearbeitungskopf weist eine um eine Rotationsachse rotierbare (drehbare) Rotorbasis auf. Der rotative Bearbeitungskopf weist einen um die Rotationsachse verlaufenden Kabelbearbeitungsraum auf, in den das zu bearbeitende Kabel ein- oder durchführbar ist. Der rotative Bearbeitungskopf weist mehrere erste Werkzeuge und mehrere von den ersten Werkzeugen verschiedenartige zweite Werkzeuge auf, wobei die ersten Werkzeuge und die zweiten Werkzeuge jeweils relativ zur Rotorbasis in Wirkrichtung jeweiliger Linearführungen bewegbar sind. Der rotative Bearbeitungskopf weist ein um die Rotationsachse relativ zur Rotorbasis in einer Drehbewegung drehbares Stellmittel auf. Der rotative Bearbeitungskopf weist einen Verstellmechanismus mit ersten Pleueln und zweiten Pleueln auf, wobei die ersten Pleuel kinematisch zwischen dem Stellmittel und den jeweiligen ersten Werkzeugen angeordnet sind, und derart ausgebildet und angeordnet sind, um die Drehbewegung des Stellmittels relativ zur Rotorbasis in jeweilige erste Linearbewegungen der ersten Werkzeuge in Wirkrichtung der jeweiligen Linearführungen zu übertragen, und wobei die zweiten Pleuel kinematisch zwischen dem Stellmittel und den jeweiligen zweiten Werkzeugen angeordnet sind, und derart ausgebildet und angeordnet sind, um die Drehbewegung (Rotationsbewegung, Verdrehbewegung) des Stellmittels relativ zur Rotorbasis in jeweilige zweite Linearbewegungen der zweiten Werkzeuge in Wirkrichtung der jeweiligen Linearführungen zu übertragen, so dass die ersten Werkzeuge gemäß den jeweiligen ersten Linearbewegungen und gleichzeitig die zweiten Werkzeuge gemäß den jeweiligen zweiten Linearbewegungen durch das Stellmittel bewegbar sind, wenn das Stellmittel die Drehbewegung relativ zur Rotorbasis ausführt.

Der rotative Bearbeitungskopf kann zur rotativen Bearbeitung von einem Kabel ausgebildet sein. Der rotative Bearbeitungskopf kann zur nicht-rotativen Bearbeitung von einem Kabel ausgebildet sein. Der rotative Bearbeitungskopf kann zur rotativen und nicht-rotativen Bearbeitung von einem Kabel ausgebildet sein. Der rotative Bearbeitungskopf kann während der Bearbeitung eines Kabels rotieren. In einer Ausführungsform ist der rotative Bearbeitungskopf derart ausgebildet, dass er während der Bearbeitung eines Kabels nicht rotiert.

Die Bearbeitung des Kabels kann zumindest eine der folgenden Modifikationen des Kabels und/oder einer Schicht des Kabels umfassen: Einschneiden, Einkerben, Perforieren, Durchschneiden, Aufweiten, Aufpressen, Scheeren, Bördeln, Krimpen, Verpressen, plastisches Verformen und Umformen, Abisolieren, Vollabzug, Teilabzug, Fenster-Abisolierung, Schlitzen (beispielsweise längs, tangential, spiralförmig), Durchstoßen, Lochen, Einprägen, Aufprägen, Sondieren (insbesondere mit einer Nadel).

Das Kabel kann in den Kabelbearbeitungsraum eingeführt werden. Das Kabel kann aus dem Kabelbearbeitungsraum ausgeführt werden. Zumindest ein Abschnitt des Kabels kann sich im Kabelbearbeitungsraum befinden. Das Kabel kann durch den Kabelbearbeitungsraum durchgeführt werden. Das Kabel kann mehrere Schichten aufweisen. Der Bearbeitungskopf kann dazu ausgebildet sein, zumindest eine Schicht des Kabels einzuschneiden. Der Bearbeitungskopf kann dazu ausgebildet sein, das Kabel durchzuschneiden.

Das Stellmittel kann um den Kabelbearbeitungsraum herum angeordnet sein. Das Stellmittel kann radial bezüglich der Rotationsachse um den Kabelbearbeitungsraum herum angeordnet sein.

Der Verstellmechanismus kann fest mit der Rotorbasis verbunden sein. Der Verstellmechanismus kann an der Rotorbasis fixierbar sein. In einer Ausführungsform ist der Verstellmechanismus in der Rotorbasis integriert. Der Verstellmechanismus kann integral mit der Rotorbasis ausgebildet sein.

Die ersten Werkzeuge und die zweiten Werkzeuge können jeweils relativ zur Rotorbasis entlang jeweiliger Linearführungen bewegbar sein.

Das Stellmittel kann dazu eingerichtet sein die Drehbewegung relativ zur Rotorbasis um die Rotationsachse auszuführen.

Das Stellmittel kann ein rotierbares Antriebselement aufweisen. Das Stellmittel kann aus einem rotierbaren Antriebselement bestehen. Das Stellmittel kann einen Stellring aufweisen. Das Stellmittel kann aus einem Stellring bestehen. Das Stellmittel kann ein Stellrohr aufweisen oder aus einem Stellrohr bestehen. Das Stellmittel kann eine Stellscheibe aufweisen oder aus einer Stellscheibe bestehen. Eine Stellscheibe kann insbesondere vorgesehen sein, wenn das Kabel den Bearbeitungskopf nicht durchläuft.

Die ersten Pleuel können mindestens zwei erste Pleuel aufweisen. Die zweiten Pleuel können mindestens zwei zweite Pleuel aufweisen.

In einer Ausführungsform können die ersten Pleuel eine Vielzahl erster Pleuel aufweisen. In einer Ausführungsform können die zweiten Pleuel eine Vielzahl zweiter Pleuel aufweisen.

Die Vielzahl der ersten Werkzeuge kann gemeinsam mithilfe des Stellmittels bewegt werden. Die Vielzahl der ersten Werkzeuge kann gleichzeitig mithilfe des Stellmittels bewegt werden. Die Vielzahl der ersten Werkzeuge kann gleichförmig mithilfe des Stellmittels bewegt werden. Jedes erste Werkzeug der Vielzahl der ersten Werkzeuge kann in der jeweiligen ersten Linearbewegung bezüglich eines ersten Zielpunktes bewegbar sein. Jedes erste Werkzeug der Vielzahl der ersten Werkzeuge kann in der jeweiligen ersten Linearbewegung in die Richtung des ersten Zielpunktes bewegbar sein. Jedes erste Werkzeug der Vielzahl der ersten Werkzeuge kann in der jeweiligen ersten Linearbewegung vom ersten Zielpunktes wegbewegbar sein. Alle ersten Werkzeuge können gleichzeitig durch die Drehbewegung des Stellmittels relativ zum ersten Zielpunkt bewegbar sein. In einer Ausführungsform können alle ersten Werkzeuge gleichzeitig und um die gleiche Strecke durch die Drehbewegung des Stellmittels relativ zum ersten Zielpunkt linear bewegbar sein.

Die Vielzahl der zweiten Werkzeuge kann gemeinsam mithilfe des Stellmittels bewegt werden. Die Vielzahl der zweiten Werkzeuge kann gleichzeitig mithilfe des Stellmittels bewegt werden. Die Vielzahl der zweiten Werkzeuge kann gleichförmig mithilfe des Stellmittels bewegt werden. Jedes zweite Werkzeug der Vielzahl der zweiten Werkzeuge kann in der jeweiligen zweiten Linearbewegung bezüglich eines zweiten Zielpunktes bewegbar sein. Jedes zweite Werkzeug der Vielzahl der zweiten Werkzeuge kann in der jeweiligen zweiten Linearbewegung in die Richtung des zweiten Zielpunktes bewegbar sein. Jedes zweite Werkzeug der Vielzahl der zweiten Werkzeuge kann in der jeweiligen zweiten Linearbewegung vom zweiten Zielpunktes wegbewegbar sein. Alle zweiten Werkzeuge können gleichzeitig durch die Drehbewegung des Stellmittels relativ zum zweiten Zielpunkt bewegbar sein. In einer Ausführungsform können alle zweiten Werkzeuge gleichzeitig und um die gleiche Strecke durch die Drehbewegung des Stellmittels relativ zum zweiten Zielpunkt linear bewegbar sein.

In einer Ausführungsform können der erste Zielpunkt und der zweite Zielpunkt zusammenfallen. Die ersten Werkzeuge und die zweiten Werkzeuge können gleichzeitig im Bezug zu demselben Zielpunkt bewegbar sein. Die ersten Werkzeuge und die zweiten Werkzeuge können synchron im Bezug zu demselben Zielpunkt bewegbar sein.

Der erste Zielpunkt kann innerhalb des Kabelbearbeitungsraumes liegen. Der zweite Zielpunkt kann innerhalb des Kabelbearbeitungsraumes liegen. Der erste Zielpunkt kann nahe der Rotationsachse angeordnet sein. Der zweite Zielpunkt kann nahe der Rotationsachse angeordnet sein. Der erste Zielpunkt kann auf der Rotationsachse angeordnet sein. Der zweite Zielpunkt kann auf der Rotationsachse angeordnet sein.

Die ersten Werkzeuge und die zweiten Werkzeuge können gemeinsam mithilfe des Stellmittels bewegt werden. Alle ersten Werkzeuge und alle zweiten Werkzeuge können gemeinsam mithilfe des Stellmittels bewegt werden. Die ersten Werkzeuge und die zweiten Werkzeuge können gleichzeitig mithilfe des Stellmittels bewegt werden. Eine Drehbewegung (Rotationsbewegung, Verdrehbewegung) des Stellmittels kann die erste Linearbewegung der ersten Werkzeuge und die gleichzeitige zweite Linearbewegung der zweiten Werkzeuge vermitteln. Die Drehbewegung des Stellmittels kann eine Vielzahl von Linearbewegungen der ersten Werkzeuge und/oder der zweiten Werkzeuge bewirken.

Ein Vorteil kann sein, dass eine Bewegung aller Werkzeuge (erste Werkzeuge und zweite Werkzeuge) koordiniert über das Stellmittel erfolgen kann. Ein Vorteil kann sein, dass eine Bewegung aller Werkzeuge (erste Werkzeuge und zweite Werkzeuge) aufeinander abgestimmt über das Stellmittel erfolgen kann. Ein gemeinsames Stellmittel kann zur Bewegung aller Werkzeuge ausgebildet sein. Ein Vorteil kann sein, dass eine Bewegung aller Werkzeuge (erste Werkzeuge und zweite Werkzeuge) mithilfe eines gemeinsamen Antriebes erfolgen kann. Die Komplexität des Bearbeitungskopfes kann vorteilhaft reduziert sein. Die Bearbeitungsschritte, die durch die ersten und zweiten Werkzeuge ausgeführt werden können, können vorteilhaft aufeinander abgestimmt sein.

Die ersten Werkzeuge und die zweiten Werkzeuge können synchron mithilfe des Stellmittels bewegt werden. Die ersten Werkzeuge und die zweiten Werkzeuge können gleichzeitig bewegt werden, wobei sich die Richtung der Bewegung der ersten Werkzeuge von der Richtung der Bewegung der zweiten Werkzeuge unterscheiden kann.

In einer Ausführungsform können die ersten Werkzeuge und die zweiten Werkzeuge gleichzeitig bewegt werden, wobei sie die Bewegungen der ersten und zweiten Werkzeuge im Bezug zu ihren jeweiligen Zielpunkten unterscheiden. Bezüglich ihrer Zielpunkte können die Linearbewegungen der ersten Werkzeuge entgegengesetzt zu den Linearbewegungen der zweiten Werkzeuge gerichtet sein. Bezüglich ihrer jeweiligen Zielpunkte können die Linearbewegungen der ersten Werkzeuge und die Linearbewegungen der zweiten Werkzeuge gegenläufig sein.

In einer Ausführungsform können die ersten Werkzeuge und die zweiten Werkzeuge gleichzeitig bewegt werden, wobei sich die ersten Werkzeuge in Richtung des ersten Zielpunktes bewegen und wobei sich die die zweiten Werkzeuge vom zweiten Zielpunkt entfernen. In einer Ausführungsform können die ersten Werkzeuge und die zweiten Werkzeuge gleichzeitig bewegt werden, wobei sich die zweiten Werkzeuge in Richtung des zweiten Zielpunktes bewegen und wobei sich die die ersten Werkzeuge vom ersten Zielpunkt entfernen.

In einer Ausführungsform kann eine Drehbewegung des Stellmittels eine Bewegung der ersten Werkzeuge in Richtung der Rotationsachse bewirken und gleichzeitig eine Bewegung der zweiten Werkzeuge bewirken, so dass sich diese von der Rotationsachse wegbewegen. In einer Ausführungsform kann eine Drehbewegung des Stellmittels eine Bewegung der ersten Werkzeuge in Richtung des Inneren des Kabelbearbeitungsraumes bewirken und gleichzeitig eine Bewegung der zweiten Werkzeuge bewirken, so dass sich diese vom Inneren des Kabelbearbeitungsraumes entfernen.

Eine Bewegung der jeweiligen Werkzeuge in Richtung des jeweiligen Zielpunktes kann auch als Zustellen bezeichnet werden. Eine Bewegung der jeweiligen Werkzeuge in Richtung vom jeweiligen Zielpunkt weg kann auch als Öffnen bezeichnet werden.

Das Stellmittel kann derart angeordnet und eingerichtet sein, dass eine gleichzeitige, gegenläufige Bewegung der ersten Werkzeuge und der zweiten Werkzeuge erreicht werden kann. Das Stellmittel kann derart angeordnet und eingerichtet sein, dass eine gleichzeitige, gegenläufige Bewegung der ersten Werkzeuge und der zweiten Werkzeuge bewirkt werden kann. Das Stellmittel kann derart angeordnet und eingerichtet sein, dass ein gleichzeitiges Zustellen der ersten Werkzeuge und Öffnen der zweiten Werkzeuge erreicht werden kann. Das Stellmittel kann derart angeordnet und eingerichtet sein, dass ein gleichzeitiges Zustellen der ersten Werkzeuge und Öffnen der zweiten Werkzeuge bewirkt werden kann. Das Stellmittel kann derart angeordnet und eingerichtet sein, dass ein gleichzeitiges Zustellen der zweiten Werkzeuge und Öffnen der ersten Werkzeuge erzielt werden kann. Das Stellmittel kann derart angeordnet und eingerichtet sein, gegenläufige Bewegungen der ersten und zweiten Werkzeuge zu erzielen. Das Stellmittel kann derart angeordnet und eingerichtet sein, zumindest über einen bestimmten Winkelbereich gegenläufige Bewegungen der ersten und zweiten Werkzeuge zu erzielen.

Die ersten Linearbewegungen können entgegengesetzt zu den zweiten Linearbewegungen gerichtet sein. Die ersten und zweiten Linearbewegungen können gegenläufige Bewegungen sein. In einer Ausführungsform kann sich durch eine Drehbewegung des Stellringes die Vielzahl erster Werkzeuge in Richtung Rotationsachse bewegen, während sich die Vielzahl von zweiten Werkzeugen von der Rotationsachse entfernt.

Ein Vorteil kann sein, dass die ersten Werkzeuge einen ersten Bearbeitungsschritt und die zweiten Werkzeuge einen zweiten Bearbeitungsschritt am Kabel nacheinander vornehmen können, ohne dass das Kabel zwischen den beiden Bearbeitungsschritten bewegt und/oder aus dem Kabelbearbeitungsraum genommen werden muss. Der Bearbeitungsprozess kann vorteilhaft beschleunigt werden. Der Bearbeitungsprozess kann vorteilhaft vereinfacht sein. Die beiden Bearbeitungsschritte können vorteilhaft aufeinander abgestimmt sein. Ein Vorteil kann sein, dass der Bearbeitungsprozess präziser sein kann. Beispielsweise könnten die Positionen von zwei Einschneidschritten aufeinander abgestimmt sein. Die Präzision der Schnitte zueinander könnte vorteilhaft verbessert sein.

Ein Vorteil kann sein, dass der Bearbeitungskopf mit dem Pleuel-Antrieb zwei Arbeitsschritte übernehmen kann, wo bis anhin zwei Bearbeitungsmaschinen oder Bearbeitungs-Stationen nötig wären. Weniger Bearbeitungsmaschinen sind erforderlich. Kosten können vorteilhaft reduziert werden.

In einer Ausführungsform können, wenn die ersten Werkzeuge vom Kabel wegbewegt werden, gleichzeitig die zweiten Werkzeuge in Richtung des Kabels bewegt werden. Wartezeiten zwischen zwei Bearbeitungsschritten können reduziert werden. Die Bearbeitung kann vorteilhaft beschleunigt sein. Ein Vorteil kann die Steigerung der Effizienz sein, insbesondere bei Beibehaltung der Präzision.

In einer Ausführungsform können die ersten Werkzeuge und die zweiten Werkzeuge über einen ersten Verstellbereich des Stellmittels (vorgegebener Winkelbereich; Verstellwinkel) gegenläufig bewegbar sein. In einer Ausführungsform können die ersten Werkzeuge und die zweiten Werkzeuge außerhalb des ersten Verstellbereiches des Stellmittels (vorgegebener Winkelbereich; Verstellwinkel) gleichläufig bewegbar sein. In einer Ausführungsform können die ersten Werkzeuge und die zweiten Werkzeuge über einen weiteren Verstellbereich des Stellmittels gleichläufig bewegbar sein. Der weitere Verstellbereich kann sich vom ersten Verstellbereich unterscheiden.

Die ersten Werkzeuge können sich von den zweiten Werkzeugen unterscheiden. Die ersten Werkzeuge können verschiedenartig zu den zweiten Werkzeugen sein.

Die ersten Werkzeuge können für einen ersten Bearbeitungsschritt des Kabels ausgebildet sein. Die zweiten Werkzeuge können für einen zweiten Bearbeitungsschritt des Kabels ausgebildet sein. Der zweite Bearbeitungsschritt kann nachfolgend auf den ersten Bearbeitungsschritt vorgesehen sein.

Jedes erste Werkzeug der Vielzahl an ersten Werkzeugen kann gleichartig sein. Jedes zweite Werkzeug der Vielzahl an zweiten Werkzeugen kann gleichartig sein.

Jedes erste Werkzeug kann in der Wirkrichtung der jeweiligen Linearführung bewegbar sein. Jedes zweite Werkzeug kann in der Wirkrichtung der jeweiligen Linearführung bewegbar sein. Jedes erste Werkzeug kann entlang der jeweiligen Linearführung bewegbar sein. Jedes zweite Werkzeug kann entlang der jeweiligen Linearführung bewegbar sein. Jedes erste Werkzeug kann in der jeweiligen Linearführung bewegbar sein. Jedes zweite Werkzeug kann in der jeweiligen Linearführung bewegbar sein. Die Linearführungen der ersten Werkzeuge können in Richtung des ersten Zielpunktes ausgerichtet sein. Die Linearführungen der zweiten Werkzeuge können in Richtung des zweiten Zielpunktes ausgerichtet sein.

Die ersten Pleuel können die ersten Werkzeuge mit dem Stellmittel verbinden. Jedes erste Werkzeug kann mit einem jeweiligen zugehörigen ersten Pleuel kinematisch mit dem Stellmittel verbunden sein. Jedem ersten Werkzeug kann jeweils ein erster Pleuel zugeordnet sein. Jedem ersten Pleuel kann jeweils ein erstes Werkzeug zugeordnet sein. Alle ersten Werkzeuge können über ihre jeweiligen ersten Pleuel mit dem Stellmittel verbunden sein.

Die zweiten Pleuel können die zweiten Werkzeuge mit dem Stellmittel verbinden. Jedes zweite Werkzeug kann mit einem jeweiligen zugehörigen zweiten Pleuel kinematisch mit dem Stellmittel verbunden sein. Jedem zweiten Werkzeug kann jeweils ein zweiter Pleuel zugeordnet sein. Jedem zweiten Pleuel kann jeweils ein zweites Werkzeug zugeordnet sein. Alle zweiten Werkzeuge können über ihre jeweiligen zweiten Pleuel mit dem Stellmittel verbunden sein. Alle ersten Werkzeuge können über ihre jeweiligen ersten Pleuel mit dem Stellmittel verbunden sein und alle zweiten Werkzeuge können über ihre jeweiligen zweiten Pleuel mit dem Stellmittel verbunden sein.

Die Drehbewegung des Stellmittels, insbesondere relativ zur Rotorbasis, kann in Linearbewegungen der ersten Werkzeuge und Linearbewegungen der zweiten Werkzeuge übertragen werden, insbesondere über die jeweiligen verbindenden Pleuel.

Ein Vorteil kann sein, dass die ersten Werkzeuge und die zweiten Werkzeuge über ein gemeinsames Stellmittel einstellbar sein können. Ein Vorteil kann sein, dass der Abstand der ersten Werkzeuge zu ihrem ersten Zielpunkt und der Abstand der zweiten Werkzeuge zu ihrem zweiten Zielpunkt gleichzeitig und aufeinander abgestimmt über ein gemeinsames Stellmittel einstellbar sein können. Ein Vorteil kann sein, dass das Zustellen und Öffnen der ersten und zweiten Werkzeuge gleichzeitig über ein gemeinsames Stellmittel einstellbar sein kann. Das Öffnen und Zustellen der Werkzeuge kann aufeinander abgestimmt sein. Vorteilhaft können die assoziierten Bearbeitungsschritte aufeinander abgestimmt sein.

In einer Ausführungsform können die Linearbewegungen der ersten Werkzeuge relativ zur Rotorbasis erfolgen. In einer Ausführungsform können die Linearbewegungen der zweiten Werkzeuge relativ zur Rotorbasis erfolgen. In einer Ausführungsform kann die Drehbewegung des Stellmittels relativ zur Rotorbasis erfolgen.

In einer Ausführungsform können die ersten Linearbewegungen und die zweiten Linearbewegungen im Wesentlichen radial in Bezug auf die Rotationsachse verlaufen.

Der erste Zielpunkt kann auf der Rotationsachse angeordnet sein. Der zweite Zielpunkt kann auf der Rotationsachse angeordnet sein.

In einer Ausführungsform können die ersten Linearbewegungen und die zweiten Linearbewegungen radial in Bezug auf die Rotationsachse verlaufen.

In einer Ausführungsform kann es zumindest eine radiale Bewegungskomponente geben.

Die ersten Werkzeuge können in Bezug zur Rotationsachse bewegbar sein. Die ersten Werkzeuge können radial bewegbar sein. Die zweiten Werkzeuge können in Bezug zur Rotationsachse bewegbar sein. Die zweiten Werkzeuge können radial bewegbar sein.

In einer Ausführungsform können die Wirkrichtungen der Linearführungen in der Transversalebene bezüglich der Rotationsachse parallel zu der radialen Richtung verschoben (zur Rotationsachse) verlaufen. In einer weiteren Ausführungsform können die Wirkrichtungen der Linearführungen mit einem Parallelversatz verlaufen bezüglich der radialen Richtung zur Rotationsachse hin, wobei der Parallelversatz vorzugsweise kleiner ist als die Summe aus dem Teilkreisradius der Stellmittel-Pleuel-Gelenke und der halben Pleuellänge.

In einer Ausführungsform können die ersten Linearbewegungen und die zweiten Linearbewegungen im Wesentlichen radial in Bezug auf die Rotationsachse verlaufen oder in ihrer Rotationsebene verschoben mit einem Parallelversatz bezüglich der radialen Richtung.

In einer Ausführungsform kann durch die ersten Linearbewegungen der Interaktionsradius der ersten Werkzeuge einstellbar sein. In einer Ausführungsform kann durch die zweiten Linearbewegungen der Interaktionsradius der zweiten Werkzeuge einstellbar sein. In einer Ausführungsform können durch die ersten Linearbewegungen und die zweiten Linearbewegungen die Interaktionsradien der ersten und zweiten Werkzeuge einstellbar sein.

Ein Vorteil kann eine symmetrische Bewegung der ersten und der zweiten Werkzeuge sein.

Ein Vorteil kann sein, dass das Kabel für die Bearbeitung zentral in den Kabelbearbeitungsraum eingeführt werden kann, um eine gleichmäßige Bearbeitung zu ermöglichen. Die Ausrichtung des Kabels in Bezug zum Kabelbearbeitungsraum kann vorteilhaft vereinfacht sein.

Der Abstand zwischen den ersten Werkzeugen und der Rotationsachse kann mithilfe des Stellmittels veränderbar sein. Alle ersten Werkzeuge können bei einer Stellung des Stellmittels denselben Abstand von der Rotationsachse aufweisen. Der Abstand zwischen dem ersten Werkzeug und der Rotationsachse kann ein erster Öffnungsradius sein. Die ersten Werkzeuge können auf einem gemeinsamen Kreis mit der Rotationsachse als Zentrum mit einem ersten Öffnungsdurchmesser angeordnet sein. Alle zweiten Werkzeuge können bei einer Stellung des Stellmittels denselben Abstand von der Rotationsachse aufweisen. Der Abstand zwischen dem zweiten Werkzeug und der Rotationsachse kann ein zweiter Öffnungsradius sein. Die zweiten Werkzeuge können auf einem gemeinsamen Kreis mit einem zweiten Öffnungsdurchmesser angeordnet sein.

Der erste Öffnungsdurchmesser kann mittels des Stellmittels veränderbar sein. Der zweite Öffnungsdurchmesser kann mittels des Stellmittels veränderbar sein.

In einer Ausführungsform können die ersten Werkzeuge auf einem gemeinsamen einstellbaren ersten Öffnungsumfang angeordnet sein, wobei der erste Öffnungsumfang durch die ersten Linearbewegung einstellbar ist. In einer Ausführungsform können die zweiten Werkzeuge auf einem gemeinsamen einstellbaren zweiten Öffnungsumfang angeordnet sein, wobei der zweite Öffnungsumfang durch die zweite Linearbewegung einstellbar ist. Der erste Öffnungsumfang und der zweite Öffnungsumfang können gleichzeitig durch das Stellmittel einstellbar sein. Durch das Einstellen der Öffnungsumfänge kann der Abstand der entsprechenden Werkzeuge zum Kabel verändert werden, wenn das Kabel in den Bearbeitungsraum eingeführt ist. Durch das Einstellen der Interaktionsradien kann der Abstand der entsprechenden Werkzeuge zum Kabel verändert werden, wenn das Kabel in den Bearbeitungsraum eingeführt ist.

Der erste Öffnungsdurchmesser kann der erste Bearbeitungsdurchmesser sein. Der zweite Öffnungsdurchmesser kann der zweite Bearbeitungsdurchmesser sein.

In einer Ausführungsform kann das Stellmittel um die Rotationsachse gegenüber der Rotorbasis um einen Verstellwinkel drehbar sein, wobei die erste Linearbewegung und die zweite Linearbewegung zumindest in einem ersten Verstellbereich des Verstellwinkels (φ) gegenläufig sind, insbesondere im Wesentlichen radial gegenläufig sind.

In einer Ausführungsform kann das Stellmittel um die Rotationsachse gegenüber der Rotorbasis um einen Verstellwinkel drehbar sein, wobei die erste Linearbewegung und die zweite Linearbewegung zumindest in einem ersten Verstellbereich des Verstellwinkels (φ) gegenläufig sind, insbesondere radial gegenläufig sind.

In einer Ausführungsform ist mit radial gegenläufig zumindest gemeint, dass sich die Abstände der ersten Werkzeuge zur Rotationsachse und die Abstände der zweiten Werkzeuge zur Rotationsachse gegenläufig verhalten. Die Schlitten müssen sich dazu nicht exakt in radialer Richtung bewegen. In einer Ausführungsform kann sich im ersten Verstellbereich des Verstellwinkels (φ) der Abstand des ersten Werkzeuges zur Rotationsachse verringern, während sich der Abstand des zweiten Werkzeuges zur Rotationsachse vergrößert. In einer Ausführungsform kann sich im ersten Verstellbereich des Verstellwinkels (φ) der Abstand des zweiten Werkzeuges zur Rotationsachse verringern, während sich der Abstand des ersten Werkzeuges zur Rotationsachse vergrößert.

In einer Ausführungsform kann das Stellmittel um die Rotationsachse gegenüber der Rotorbasis um einen Verstellwinkel drehbar sein, wobei die erste Linearbewegung und die zweite Linearbewegung zumindest in einem ersten Verstellbereich des Verstellwinkels (φ) gleichzeitig und gegenläufig sind, insbesondere radial gegenläufig sind.

Der erste Verstellbereich kann durch die Konstruktion und der Kinematik vorgegeben sein.

In einer Ausführungsform können die ersten Werkzeuge und die zweiten Werkzeuge bei einem Verstellwinkel φ = 0° vom Betrag her den gleichen Abstand von der Rotationsachse aufweisen. In einer Ausführungsform können die ersten Werkzeuge und die zweiten Werkzeuge bei einem Verstellwinkel φ = 0° vom Betrag her den gleichen Abstand von dem Stellmittel aufweisen. Eine Drehbewegung des Stellmittels aus dem Verstellwinkel φ = 0° heraus, kann eine Linearbewegung der ersten Werkzeuge in Richtung der Rotationsachse und eine gleichzeitige Bewegung der zweiten Werkzeuge weg von der Rotationsachse vermitteln. Eine Drehbewegung des Stellmittels aus dem Verstellwinkel φ = 0° heraus, kann eine Linearbewegung der zweiten Werkzeuge in Richtung der Rotationsachse und eine gleichzeitige Bewegung der ersten Werkzeuge weg von der Rotationsachse vermitteln.

Abhängig von der Richtung der Rotationsbewegung, in der das Stellmittel gegenüber der Rotorbasis aus dem Verstellwinkel φ = 0° ausgelenkt wird, können die ersten Werkzeuge oder die zweiten Werkzeuge in Richtung der Rotationsachse bewegt werden (zugestellt werden). Abhängig von der Richtung der Rotationsbewegung, in der das Stellmittel aus dem Verstellwinkel φ = 0° ausgelenkt wird, können die ersten Werkzeuge oder die zweiten Werkzeuge von der Rotationsachse wegbewegt werden (geöffnet werden).

Der Verstellwinkel φ = 0° kann mit der Neutralstellung assoziiert sein. In einer Ausführungsform kann sich der Bearbeitungskopf bei dem Verstellwinkel φ = 0° in der Neutralstellung befinden.

Der erste Öffnungsumfang und der zweite Öffnungsumfang können bei dem Verstellwinkel φ = 0° identisch sein. Die Rotationsbewegung des Stellmittels in eine erste Drehrichtung aus dem Verstellwinkel φ = 0° kann den erste Öffnungsumfang vergrößern und den zweiten Öffnungsumfang reduzieren. Die Rotationsbewegung des Stellmittels in eine zweite von der ersten Drehrichtung abweichenden Drehrichtung aus dem Verstellwinkel φ = 0° kann den erste Öffnungsumfang reduzieren und der zweite Öffnungsumfang vergrößern.

Ein Bewegungsprofil der ersten Werkzeuge kann sich vom Bewegungsprofil der zweiten Werkzeuge unterscheiden. Das Bewegungsprofil der ersten Werkzeuge kann entgegengesetzt zum Bewegungsprofil der zweiten Werkzeuge verlaufen. Die Bewegungsprofile der ersten und zweiten Werkzeuge können zumindest über den ersten Verstellbereich der Drehung des Stellmittels (vorgegebener Bereich des Verstellwinkels) entgegengesetzt sein.

Der erste Verstellbereich kann zwischen 0° und ±4° liegen. Der erste Verstellbereich kann zwischen 0° und ±15° liegen. Der erste Verstellbereich kann zwischen 0° und ±20° liegen. Der erste Verstellbereich kann zwischen 0° und ±30° liegen. Der erste Verstellbereich kann zwischen 0° und ±45° liegen.

In einer Ausführungsform kann der Bearbeitungskopf drei erste Werkzeuge und drei zweite Werkzeuge aufweisen und der erste Verstellbereich zwischen 0° und ±30° liegen. In einer Ausführungsform kann der Bearbeitungskopf sechs erste Werkzeuge und sechs zweite Werkzeuge aufweisen und der erste Verstellbereich zwischen 0° und ±15° liegen. In einer Ausführungsform kann der Bearbeitungskopf zwei erste Werkzeuge und zwei zweite Werkzeuge aufweisen und der erste Verstellbereich zwischen 0° und ±45° liegen. In einer Ausführungsform kann der Bearbeitungskopf vier erste Werkzeuge und vier zweite Werkzeuge aufweisen und der erste Verstellbereich zwischen 0° und ±22,5° liegen.

Außerhalb des ersten Verstellbereiches (insbesondere für große Verstellwinkel) können die ersten Werkzeuge und die zweiten Werkzeuge in dieselbe Richtung (zur Rotationsachse hin oder weg) bewegbar sein. Außerhalb des ersten Verstellbereiches können die ersten Werkzeuge und die zweiten Werkzeuge mit unterschiedlichem Abstand zur Rotationsachse in dieselbe Richtung bewegbar sein. Außerhalb des ersten Verstellbereiches können die ersten Werkzeuge und die zweiten Werkzeuge gemeinsam und gleichzeitig in Richtung der Rotationsachse bewegbar sein. Außerhalb des ersten Verstellbereiches können die ersten Werkzeuge und die zweiten Werkzeuge gemeinsam und gleichzeitig von der Rotationsachse entfernbar sein.

Zwei verschiedene Werkzeugsätze können mithilfe des Stellmittels radial verschiebbar sein, insbesondere kann dabei der eine Werkzeugsatz geöffnet werden, während sich der andere Werkzeugsatz schließt. Ein Vorteil kann sein, dass ein Kabel in zwei Bearbeitungsschritten, für die unterschiedliche Werkzeuge (erste Werkzeuge, zweite Werkzeuge) nötig sind, mit demselben Bearbeitungskopf bearbeitet werden kann, insbesondere ohne dass das Kabel dafür in eine andere Kabelbearbeitungsstation gebracht werden muss.

In einer Ausführungsform kann jedes der ersten Werkzeuge an einem zugehörigen ersten Schlitten angeordnet sein, wobei das Stellmittel mit jedem ersten Pleuel und dem zugehörigen ersten Schlitten einen jeweiligen ersten Kurbeltrieb ausbildet.

In einer Ausführungsform kann jedes der zweiten Werkzeuge an einem zugehörigen zweiten Schlitten angeordnet sein, wobei das Stellmittel mit jedem zweiten Pleuel und dem zugehörigen zweiten Schlitten einen jeweiligen zweiten Kurbeltrieb ausbildet.

In einer Ausführungsform kann jedes der ersten Werkzeuge an einem zugehörigen ersten Schlitten angeordnet sein, wobei das Stellmittel mit jedem ersten Pleuel und dem zugehörigen ersten Schlitten einen jeweiligen ersten Kurbeltrieb ausbildet, und jedes der zweiten Werkzeuge kann an einem zugehörigen zweiten Schlitten angeordnet sein, wobei das Stellmittel mit jedem zweiten Pleuel und dem zugehörigen zweiten Schlitten einen jeweiligen zweiten Kurbeltrieb ausbildet.

In einer Ausführungsform kann die Stellring-Pleuel-Schlitten-Verbindung je einen Kurbeltrieb ausbilden. In einer Ausführungsform kann die Stellring-Pleuel-Werkzeug-Verbindung je einen Kurbeltrieb ausbilden. In einer Ausführungsform kann die Stellring-Pleuel-Messerschlitten-Verbindung je einen Kurbeltrieb ausbilden.

In einer Ausführungsform kann durch eine geeignete Anordnung der Pleuel in Bezug auf das Stellmittel und durch die im Wesentlichen radiale Werkzeugbewegungsrichtung erreicht werden, dass sich beim Drehen des Stellmittels der eine Werkzeugsatz gegen die Rotationsachse bewegt, während sich der andere Werkzeugsatz von der Rotationsachse entfernt.

In einer Ausführungsform können die Pleuel zwischen dem jeweiligen Schlitten und dem Stellmittel so angeordnet sein, dass sich der erste Kurbeltrieb-Satz der ersten Werkzeuge im geöffneten Zustand um den Totpunkt herumbewegt, während sich der zweite Kurbeltrieb-Satz der zweiten Werkzeuge entfernt von dessen Totpunkt bewegen lässt.

In einer Ausführungsform kann sich der zweite Kurbeltrieb-Satz des zweiten Werkzeugsatzes im geöffneten Zustand um den Totpunkt herumbewegen und sich der erste Kurbeltrieb-Satz des ersten Werkzeugsatzes entfernt von dessen Totpunkt befinden.

Ein Vorteil kann sein, dass die Verfahrwege der zurückgestellten Schlitten und der assoziierten Werkzeuge um den Totpunkt herum klein gehalten und somit auch der Durchmesser des Bearbeitungskopfes klein gehalten werden kann, wodurch der Bauraum vorteilhaft reduziert wird.

Das erste Werkzeug kann über einen ersten Schlitten an dem jeweiligen ersten Pleuel festgelegt sein. Das zweite Werkzeug kann über einen zweiten Schlitten an dem jeweiligen zweiten Pleuel festgelegt sein.

Die ersten Schlitten können bewegbar in ersten Schlittenführungen angeordnet sein. Die zweiten Schlitten können bewegbar in zweiten Schlittenführungen angeordnet sein. Die ersten Schlitten können in Wirkrichtung der ersten Linearführungen bewegbar sein. Die zweiten Schlitten können in Wirkrichtung der zweiten Linearführungen bewegbar sein. Die ersten Linearführungen können die ersten Schlittenführungen umfassen. Die zweiten Linearführungen können die zweiten Schlittenführungen umfassen. Die ersten Linearführungen können aus den ersten Schlittenführungen bestehen. Die zweiten Linearführungen können aus den zweiten Schlittenführungen bestehen.

Ein Vorteil kann sein, dass die Linearbewegungen durch die Schlittenführungen stabilisiert werden können. Vorteilhaft können die Linearbewegungen stabiler erfolgen. Das Öffnen und/oder Zustellen kann vorteilhaft präziser sein.

In einer Ausführungsform kann der Bearbeitungskopf derart ausgebildet sein, dass sich der erster Kurbeltrieb des ersten Werkzeuges im geöffneten Zustand (großer Öffnungsdurchmesser) um den Totpunkt herumbewegt, während sich der zweiter Kurbeltrieb des zweiten Werkzeuges gleichzeitig entfernt von dessen Totpunkt bewegen kann. In einer Ausführungsform kann der Bearbeitungskopf derart ausgebildet sein, dass sich der zweite Kurbeltrieb des zweiten Werkzeuges im geöffneten Zustand (großer Öffnungsdurchmesser) um den Totpunkt herumbewegt, während sich der erste Kurbeltrieb des ersten Werkzeuges gleichzeitig entfernt von dessen Totpunkt bewegen kann.

In einer Ausführungsform kann der Verstellmechanismus derart ausgebildet sein, dass, wenn sich die ersten Kurbeltriebe um den ersten Totpunkt herum bewegen können, sich die zweiten Kurbeltriebe entfernt vom zweiten Totpunkt bewegen können. In einer Ausführungsform kann der Verstellmechanismus derart ausgebildet sein, dass, wenn sich die zweiten Kurbeltriebe um den zweiten Totpunkt herum bewegen können, sich die ersten Kurbeltriebe entfernt vom ersten Totpunkt bewegen können.

In einer Ausführungsform kann zumindest eines der ersten Werkzeuge und der zugehörige erste Schlitten als separate Bauteile ausgeführt sein, wobei das erste Werkzeug und der zugehörige erste Schlitten zumindest über ein erstes Schlitten-Werkzeug-Gelenk miteinander verbunden sind.

In einer Ausführungsform kann zumindest eines der zweiten Werkzeuge und der zugehörige zweite Schlitten als separate Bauteile ausgeführt sein, wobei das zweite Werkzeug und der zugehörige zweite Schlitten über zumindest ein zweites Schlitten-Werkzeug-Gelenk miteinander verbunden sind.

Ein Vorteil kann sein, dass erste Werkzeuge und/oder zweite Werkzeuge auf einfach Weise ersetzt werden können. Ein Vorteil kann sein, dass erste Werkzeuge und/oder zweite Werkzeuge einfach ausgetauscht werden können, insbesondere ohne einen Austausch der Schlitten.

Ein Vorteil kann sein, dass eine elektrische Isolierung einzelner Werkzeuge ermöglicht sein kann. Ein Vorteil kann sein, dass ein Werkzeug für eine Werkzeug-Leiter-Berührungs-Detektion ausgebildet sein kann. Eine Werkzeug-Leiter-Berührungs-Detektion kann auf einfache Weise ermöglicht werden.

In einer Ausführungsform kann zumindest eines der ersten Werkzeuge und der zugehörige ersten Schlitten integral (einstückig; in einem Bauteil vereint) ausgebildet sein.

In einer Ausführungsform kann zumindest eines der zweiten Werkzeuge und der zugehörige zweite Schlitten integral (einstückig; in einem Bauteil vereint) ausgebildet sein.

In einer Ausführungsform kann eine Funktion des Schlittens durch das jeweilige Werkzeug übernommen sein. Der Schlitten und das zugehörige Werkzeug können vereint sein.

Ein Vorteil kann sein, dass die ersten Werkzeuge und/oder die zweiten Werkzeuge besonders stabil bewegbar sein können.

In einer Ausführungsform kann zumindest eines der ersten Werkzeuge und der zugehörige erste Schlitten als separate Bauteile ausgeführt sein, wobei das erste Werkzeug und der zugehörige erste Schlitten zumindest über ein erstes Schlitten-Werkzeug-Gelenk miteinander verbunden sind, und zumindest eines der ersten Werkzeuge und der zugehörige ersten Schlitten integral ausgebildet sein.

In einer Ausführungsform kann zumindest eines der zweiten Werkzeuge und der zugehörige zweiten Schlitten als separate Bauteile ausgeführt sein, wobei das zweite Werkzeug und der zugehörige zweite Schlitten zumindest über ein zweites Schlitten-Werkzeug-Gelenk miteinander verbunden sind, und zumindest eines der zweiten Werkzeuge und der zugehörige zweiten Schlitten integral ausgebildet sein.

In einer Ausführungsform kann jedes der ersten Werkzeuge und der zugehörige erste Schlitten als separate Bauteile ausgeführt sein, wobei das erste Werkzeug und der zugehörige erste Schlitten zumindest über ein erstes Schlitten-Werkzeug-Gelenk miteinander verbunden sind.

In einer Ausführungsform kann jedes der ersten Werkzeuge und der zugehörige erste Schlitten integral ausgebildet sein.

In einer Ausführungsform kann jedes der zweiten Werkzeuge und der zugehörige zweite Schlitten als separate Bauteile ausgeführt sein, wobei das zweite Werkzeug und der zugehörige zweite Schlitten zumindest über ein zweites Schlitten-Werkzeug-Gelenk miteinander verbunden sind.

In einer Ausführungsform kann jedes der zweiten Werkzeuge und der zugehörige zweite Schlitten integral ausgebildet sein.

In einer Ausführungsform kann jedes der ersten Werkzeuge und der zugehörige erste Schlitten integral ausgebildet sein und jedes der zweiten Werkzeuge und der zugehörige zweite Schlitten integral ausgebildet sein.

In einer Ausführungsform kann jedes der ersten Werkzeuge und der zugehörige erste Schlitten als separate Bauteile ausgeführt sein, wobei das erste Werkzeug und der zugehörige erste Schlitten zumindest über ein erstes Schlitten-Werkzeug-Gelenk miteinander verbunden sind, und kann jedes der zweiten Werkzeuge und der zugehörige zweite Schlitten als separate Bauteile ausgeführt sein, wobei das zweite Werkzeug und der zugehörige zweite Schlitten zumindest über zweites Schlitten-Werkzeug-Gelenk Gelenk miteinander verbunden sind.

In einer Ausführungsform kann sich jeder erste Pleuel zwischen einem Kopfende und einem Fußende erstrecken, wobei jeder erste Pleuel an seinem Fußende mit dem Stellmittel über ein erstes Stellmittel-Pleuel-Gelenk verbunden ist.

In einer Ausführungsform kann zumindest einer der ersten Pleuel an seinem Kopfende mit dem zugehörigen ersten Schlitten über ein erstes Schlitten-Pleuel-Gelenk mechanisch verbunden sein.

In einer Ausführungsform kann zumindest einer der ersten Pleuel an seinem Kopfende mit dem zugehörigen ersten Werkzeug über ein erstes Werkzeug-Pleuel-Gelenk mechanisch verbunden sein.

In einer Ausführungsform kann sich jeder erste Pleuel zwischen einem Kopfende und einem Fußende erstrecken, wobei jeder erste Pleuel an seinem Fußende mit dem Stellmittel über ein erstes Stellmittel-Pleuel-Gelenk verbunden ist, und kann zumindest einer der ersten Pleuel an seinem Kopfende mit dem zugehörigen ersten Schlitten über ein erstes Schlitten-Pleuel-Gelenk mechanisch verbunden sein.

In einer Ausführungsform kann sich jeder erste Pleuel zwischen einem Kopfende und einem Fußende erstrecken, wobei jeder erste Pleuel an seinem Fußende mit dem Stellmittel über ein erstes Stellmittel-Pleuel-Gelenk verbunden ist, und kann zumindest einer der ersten Pleuel an seinem Kopfende mit dem zugehörigen ersten Werkzeug über ein erstes Werkzeug-Pleuel-Gelenk mechanisch verbunden sein.

In einer Ausführungsform kann sich jeder erste Pleuel zwischen einem Kopfende und einem Fußende erstrecken, wobei jeder erste Pleuel an seinem Fußende mit dem Stellmittel über ein erstes Stellmittel-Pleuel-Gelenk verbunden ist, und kann zumindest einer der ersten Pleuel an seinem Kopfende mit dem zugehörigen ersten Schlitten über ein erstes Schlitten-Pleuel-Gelenk mechanisch verbunden sein, und kann zumindest einer (ein anderer) der ersten Pleuel an seinem Kopfende mit dem zugehörigen ersten Werkzeug über ein erstes Werkzeug-Pleuel-Gelenk mechanisch verbunden sein.

In einer Ausführungsform kann sich jeder erste Pleuel zwischen einem Kopfende und einem Fußende erstrecken, wobei jeder erste Pleuel an seinem Fußende mit dem Stellmittel über ein erstes Stellmittel-Pleuel-Gelenk verbunden ist, und kann jeder der ersten Pleuel an seinem Kopfende mit dem zugehörigen ersten Schlitten über ein erstes Schlitten-Pleuel-Gelenk mechanisch verbunden sein.

In einer Ausführungsform kann sich jeder erste Pleuel zwischen einem Kopfende und einem Fußende erstrecken, wobei jeder erste Pleuel an seinem Fußende mit dem Stellmittel über ein erstes Stellmittel-Pleuel-Gelenk verbunden ist, und kann jeder der ersten Pleuel an seinem Kopfende mit dem zugehörigen ersten Werkzeug über ein erstes Werkzeug-Pleuel-Gelenk mechanisch verbunden sein.

Ein Vorteil kann sein, dass die gelenkigen Verbindungen die Bewegung des Stellmittels geeignet an die Pleuel und die assoziierten ersten Werkzeuge übertragen können.

Falls ein Werkzeug für eine Werkzeug-Leiter-Berührungsdetektion gegenüber der Rotorbasis elektrisch isoliert sein muss, kann vorteilhafterweise die gelenkige Verbindung aus einem nicht elektrisch leitenden Bauteil ausgeführt sein, wie zum Beispiel aus einem Stift aus Zirkonium.

In einer Ausführungsform kann sich jeder zweite Pleuel zwischen einem Kopfende und einem Fußende erstrecken, wobei jeder zweite Pleuel an seinem Fußende mit dem Stellmittel über ein zweites Stellmittel-Pleuel-Gelenk verbunden ist.

In einer Ausführungsform kann zumindest einer der zweiten Pleuel an seinem Kopfende mit dem zugehörigen zweiten Schlitten über ein zweites Schlitten-Pleuel-Gelenk mechanisch verbunden sein.

In einer Ausführungsform kann zumindest einer der zweiten Pleuel an seinem Kopfende mit dem zugehörigen zweiten Werkzeug über ein zweites Werkzeug-Pleuel-Gelenk mechanisch verbunden sein.

In einer Ausführungsform kann sich jeder zweite Pleuel zwischen einem Kopfende und einem Fußende erstrecken, wobei jeder zweite Pleuel an seinem Fußende mit dem Stellmittel über ein zweites Stellmittel-Pleuel-Gelenk verbunden ist, und kann zumindest einer der zweiten Pleuel an seinem Kopfende mit dem zugehörigen zweiten Schlitten über ein zweites Schlitten-Pleuel-Gelenk mechanisch verbunden sein.

In einer Ausführungsform kann sich jeder zweite Pleuel zwischen einem Kopfende und einem Fußende erstrecken, wobei jeder zweite Pleuel an seinem Fußende mit dem Stellmittel über ein zweites Stellmittel-Pleuel-Gelenk verbunden ist, und kann zumindest einer der zweiten Pleuel an seinem Kopfende mit dem zugehörigen zweiten Werkzeug über ein zweites Werkzeug-Pleuel-Gelenk mechanisch verbunden sein.

In einer Ausführungsform kann sich jeder zweite Pleuel zwischen einem Kopfende und einem Fußende erstrecken, wobei jeder zweite Pleuel an seinem Fußende mit dem Stellmittel über ein zweites Stellmittel-Pleuel-Gelenk verbunden ist, und kann zumindest einer der zweiten Pleuel an seinem Kopfende mit dem zugehörigen zweiten Schlitten über ein zweites Schlitten-Pleuel-Gelenk mechanisch verbunden sein, und kann zumindest einer (ein anderer) der zweiten Pleuel an seinem Kopfende mit dem zugehörigen zweiten Werkzeug über ein zweites Werkzeug-Pleuel-Gelenk mechanisch verbunden sein.

In einer Ausführungsform kann sich jeder zweite Pleuel zwischen einem Kopfende und einem Fußende erstrecken, wobei jeder zweite Pleuel an seinem Fußende mit dem Stellmittel über ein zweites Stellmittel-Pleuel-Gelenk verbunden ist, und kann jeder der zweiten Pleuel an seinem Kopfende mit dem zugehörigen zweiten Schlitten über ein zweites Schlitten-Pleuel-Gelenk mechanisch verbunden sein.

In einer Ausführungsform kann sich jeder zweite Pleuel zwischen einem Kopfende und einem Fußende erstrecken, wobei jeder zweite Pleuel an seinem Fußende mit dem Stellmittel über ein zweites Stellmittel-Pleuel-Gelenk verbunden ist, und kann jeder der zweiten Pleuel an seinem Kopfende mit dem zugehörigen zweiten Werkzeug über ein zweites Werkzeug-Pleuel-Gelenk mechanisch verbunden sein.

Ein Vorteil kann sein, dass die gelenkigen Verbindungen die Bewegung des Stellmittels geeignet an die Pleuel und die assoziierten zweiten Werkzeuge übertragen können.

In einer Ausführungsform kann zumindest ein erster Pleuel zwischen dem Kopfende und dem Fußende einen zentralen Bereich aufweisen, wobei sich der erste Pleuel entlang einer Pleuel-Wirklinie vom Kopfende zum zentralen Bereich verbreitert und vom zentralen Bereich zum Fußende verjüngt. In einer Ausführungsform kann zumindest ein erster Pleuel zwischen dem Kopfende und dem Fußende einen zentralen Bereich aufweisen, wobei sich der erste Pleuel entlang einer Längsachse des ersten Pleuels vom Kopfende zum zentralen Bereich verbreitert und vom zentralen Bereich zum Fußende verjüngt. In einer Ausführungsform kann zumindest ein zweiter Pleuel zwischen dem Kopfende und dem Fußende einen zentralen Bereich aufweisen, wobei sich der zweite Pleuel entlang einer Pleuel-Wirklinie vom Kopfende zum zentralen Bereich verbreitert und vom zentralen Bereich zum Fußende verjüngt. In einer Ausführungsform kann zumindest ein zweiter Pleuel zwischen dem Kopfende und dem Fußende einen zentralen Bereich aufweisen, wobei sich der zweite Pleuel entlang einer Längsachse des zweiten Pleuels vom Kopfende zum zentralen Bereich verbreitert und vom zentralen Bereich zum Fußende verjüngt.

In einer Ausführungsform kann die Breite zumindest eines ersten Pleuels zwischen dem Kopfende und dem Fußende konstant sein. In einer Ausführungsform kann die Breite zumindest eines zweiten Pleuels zwischen dem Kopfende und dem Fußende konstant sein. In einer Ausführungsform kann die Breite jedes ersten Pleuels zwischen dem Kopfende und dem Fußende konstant sein. In einer Ausführungsform kann die Breite jedes zweiten Pleuels zwischen dem Kopfende und dem Fußende konstant sein. Die Breite des jeweiligen Pleuels kann senkrecht zur Längserstreckung des jeweiligen Pleuels verlaufen.

In einer Ausführungsform können alle ersten Pleuel gleich gestaltet sein (gleichartig; gleichförmig; gleiche Gestalt). In einer Ausführungsform können alle zweiten Pleuel gleich gestaltet sein. In einer Ausführungsform können die ersten Pleuel und die zweiten Pleuel gleich gestaltet sein. Ein Vorteil kann sein, dass die Produktion der Pleuel vereinheitlicht werden kann. Produktionskosten könnten vorteilhaft reduziert sein.

In einer Ausführungsform kann jeder der ersten Pleuel zwischen dem Kopfende und dem Fußende einen zentralen Bereich aufweisen, wobei sich der erste Pleuel entlang einer Pleuel-Wirklinie vom Kopfende zum zentralen Bereich verbreitert und vom zentralen Bereich zum Fußende verjüngt.

In einer Ausführungsform kann jeder der zweiten Pleuel zwischen dem Kopfende und dem Fußende einen zentralen Bereich aufweisen, wobei sich der zweite Pleuel entlang der Pleuel-Wirklinie vom Kopfende zum zentralen Bereich verbreitert und vom zentralen Bereich zum Fußende verjüngt.

In einer Ausführungsform kann jeder der ersten Pleuel zwischen dem Kopfende und dem Fußende einen zentralen Bereich aufweisen, wobei sich der erste Pleuel entlang einer Pleuel-Wirklinie vom Kopfende zum zentralen Bereich verbreitert und vom zentralen Bereich zum Fußende verjüngt, und kann jeder der zweiten Pleuel zwischen dem Kopfende und dem Fußende einen zentralen Bereich aufweisen, wobei sich der zweite Pleuel entlang der Pleuel-Wirklinie vom Kopfende zum zentralen Bereich verbreitert und vom zentralen Bereich zum Fußende verjüngt.

In einer Ausführungsform kann sich die Pleuel-Wirklinie entlang einer Längsachse des jeweiligen Pleuels erstrecken. In einer Ausführungsform kann sich die Pleuel-Wirklinie vom Fußende des jeweiligen Pleuels zum Kopfende des jeweiligen Pleuels erstrecken.

Wenn die Pleuel und Schlitten aus Flachprofilen gefertigt sind und aufeinander liegen, kann eine mittige Verbreiterung der Pleuel bewirken, dass die Schlitten in jedem Bereich der Pleuelauslenkung eben und positionsstabil auf dem Pleuel aufliegen. Die Führung des Pleuels in einer Ebene kann somit vorteilhaft stabilisiert sein. Die Bewegung der Pleuel und der assoziierten Werkzeuge kann vorteilhaft stabilisiert werden.

Jeder erste Pleuel kann sich zwischen dem jeweiligen Kopfende des jeweiligen ersten Pleuels und dem jeweiligen Fußende des jeweiligen ersten Pleuels entlang der jeweiligen Pleuel-Wirklinie erstrecken. Jeder zweite Pleuel kann sich zwischen dem jeweiligen Kopfende des jeweiligen zweiten Pleuels und dem jeweiligen Fußende des jeweiligen zweiten Pleuels entlang der jeweiligen Pleuel-Wirklinie erstrecken.

In einer Ausführungsform können die ersten Pleuel asymmetrisch bezüglich ihrer jeweiligen Pleuel-Wirklinie ausgebildet sein.

In einer Ausführungsform können die zweiten Pleuel asymmetrisch bezüglich ihrer jeweiligen Pleuel-Wirklinie ausgebildet sein.

In einer Ausführungsform können die ersten Pleuel als Flachprofile ausgebildet sein.

In einer Ausführungsform können die zweiten Pleuel als Flachprofile ausgebildet sein.

In einer Ausführungsform können die ersten Pleuel asymmetrisch bezüglich ihrer jeweiligen Pleuel-Wirklinie ausgebildet sein, und die zweiten Pleuel asymmetrisch bezüglich ihrer jeweiligen Pleuel-Wirklinie ausgebildet sein.

In einer Ausführungsform können die ersten Pleuel als Flachprofile ausgebildet sein, und können die zweiten Pleuel als Flachprofile ausgebildet sein.

In einer Ausführungsform können die ersten Pleuel asymmetrisch bezüglich ihrer jeweiligen Pleuel-Wirklinie und als Flachprofile ausgebildet sein.

In einer Ausführungsform können die zweiten Pleuel asymmetrisch bezüglich ihrer jeweiligen Pleuel-Wirklinie und als Flachprofile ausgebildet sein.

In einer Ausführungsform können die ersten Pleuel asymmetrisch bezüglich ihrer jeweiligen Pleuel-Wirklinie und als Flachprofile ausgebildet sein, und können die zweiten Pleuel asymmetrisch bezüglich ihrer jeweiligen Pleuel-Wirklinie und als Flachprofile ausgebildet sein.

Die Führung des jeweiligen Pleuels in einer Ebene (Pleuel-Bewegungs-Ebene) kann vorteilhaft stabilisiert sein.

In einer Ausführungsform kann sich jeder erste Pleuel zwischen dem Kopfende und dem Fußende entlang einer jeweiligen Längsachse des jeweiligen Pleuels erstreckt, insbesondere wobei die ersten Pleuel als Flachprofile ausgebildet sind.

In einer Ausführungsform kann sich jeder zweite Pleuel zwischen dem Kopfende und dem Fußende entlang einer jeweiligen Längsachse des jeweiligen Pleuels erstreckt, insbesondere wobei die zweiten Pleuel als Flachprofile ausgebildet sind.

Die Pleuel-Wirklinie kann sich entlang der Längsachse des jeweiligen Pleuels erstrecken. Die Pleuel-Wirklinie kann sich zwischen dem Kopfende und dem Fußende des jeweiligen Pleuels erstrecken.

Bei dem Flachprofil kann die Höhenerstreckung des Pleuels senkrecht zur Wirklinie geringer sein als die Erstreckung in Längsrichtung. Durch den schichtartigen Aufbau von Stellring, Pleuel und Schlitten können auf Fixierelemente, welche die Pleuel in Richtung der Rotationsachse positionieren, verzichtet werden. Ein Vorteil kann sein, dass wenig Bauraum und Fixierelemente erforderlich sind.

Ein Vorteil kann eine stabilisierte Bewegung in der Pleuel-Bewegungs-Ebene sein. Vorteilhaft kann die Bewegung des jeweiligen assoziierten Werkzeuges stabilisiert sein.

Durch die flächige Gestaltung der Pleuel (erste Pleuel und/oder zweite Pleuel) kann die Bewegung der Pleuel in der Ebene stabiler verlaufen. Die Bewegung der an den Pleueln angeordneten ersten und/oder zweiten Werkzeuge kann vorteilhaft stabilisiert sein.

In einer Ausführungsform können die Pleuel asymmetrisch gestaltet sein.

Vorteile der asymmetrischen Ausgestaltung können sein, dass derartige Pleuel über ihren ganzen Bewegungsraum mit nichts kollidieren, die Kabelöffnung nicht versperren und trotzdem eine gute flächige und gleitfähige Auflage bilden.

In einer Ausführungsform kann jeder erste Pleuel und jeder zweite Pleuel an einer separaten Festlegstelle mit dem Stellmittel gelenkig verbunden sein. In einer Ausführungsform kann jeder erste Pleuel und jeder zweite Pleuel an einer jeweiligen separaten Festlegstelle mit dem Stellmittel gelenkig verbunden sein. Jeder Pleuel (jeder erste Pleuel und jeder zweite Pleuel) kann an einer jeweiligen individuellen Festlegstelle mit dem Stellmittel gelenkig verbunden sein. Die Anzahl der Festlegstelle kann identisch mit der Anzahl der Pleuel sein.

In einer Ausführungsform kann jeder erste Pleuel und jeder zweite Pleuel separat an dem Stellmittel festgelegt sein.

Die Festlegstellen der ersten Pleuel können gleichmäßig verteilt entlang einer Umlaufrichtung (Umfangsrichtung) des Stellmittels am Stellmittel angeordnet sein. Die Festlegstellen der ersten Pleuel können am Stellmittel bezüglich seiner Drehachse gleichwinklig verteilt angeordnet sein. In einer Ausführungsform können die Festlegstellen der ersten Pleuel rotationssymmetrisch am Stellmittel angeordnet sein. In einer Ausführungsform können die Festlegstellen der ersten Pleuel äquidistant entlang der Umlaufrichtung des Stellmittels am Stellmittel angeordnet sein.

Die Festlegstellen der zweiten Pleuel können gleichmäßig verteilt entlang der Umlaufrichtung des Stellmittels am Stellmittel angeordnet sein. Die Festlegstellen der zweiten Pleuel können am Stellmittel bezüglich seiner Drehachse gleichwinklig verteilt angeordnet sein. In einer Ausführungsform können die Festlegstellen der zweiten Pleuel rotationssymmetrisch am Stellmittel angeordnet sein. In einer Ausführungsform können die Festlegstellen der zweiten Pleuel äquidistant entlang der Umlaufrichtung des Stellmittels am Stellmittel angeordnet sein.

Die Festlegstellen der ersten Pleuel können entlang der Umlaufrichtung des Stellmittels versetzt zu den Festlegstellen der zweiten Pleuel angeordnet sein. In einer Ausführungsform kann zwischen zwei aufeinanderfolgenden (in Umlaufrichtung aufeinanderfolgenden) Festlegstellen der ersten Pleuel eine Festlegstelle eines zweiten Pleuels angeordnet sein.

Ein Vorteil kann sein, dass alle Pleuel in einer gemeinsamen Pleuelebene angeordnet sein können. Ein Vorteil kann sein, dass der Bauraum des Bearbeitungskopfes reduziert sein kann.

Alle ersten Pleuel und alle zweiten Pleuel können in einer gemeinsamen Ebene bewegbar angeordnet sein.

In einer Ausführungsform kann einer der ersten Pleuel und einer der zweiten Pleuel ein Pleuelpaar bilden, welches an einer gemeinsamen Paarfestlegstelle mit dem Stellmittel gelenkig verbunden ist.

In einer Ausführungsform kann jeder der ersten Pleuel und mit einem jeweiligen zweiten Pleuel ein jeweiliges Pleuelpaar bilden, welches an einer jeweiligen gemeinsamen Paarfestlegstelle mit dem Stellmittel gelenkig verbunden ist.

In einer Ausführungsform kann ein Pleuelpaar gemeinsam an dem Stellmittel festgelegt sein. In einer Ausführungsform kann jedes Pleuelpaar separat an dem Stellmittel festgelegt sein.

Die Paarfestlegstellen können gleichmäßig verteilt entlang der Umlaufrichtung des Stellmittels am Stellmittel angeordnet sein. Die Paarfestlegstellen können gleichwinklig bezüglich der Drehachse des Stellmittels am Stellmittel angeordnet sein. In einer Ausführungsform können die Paarfestlegstellen rotationssymmetrisch am Stellmittel angeordnet sein. In einer Ausführungsform können die Paarfestlegstellen äquidistant entlang der Umlaufrichtung des Stellmittels am Stellmittel angeordnet sein.

Ein Vorteil kann sein, dass die Anzahl der Festlegstellen reduziert sein kann. Ein Vorteil kann sein, dass der erste Verstellbereich (±λ) maximiert sein kann, bei dem die Linearbewegungen der ersten Werkzeuge und die Linearbewegungen der zweiten Werkzeuge gegenläufig sind, ohne dass sich die Pleuel dabei kreuzen.

In einer Ausführungsform können die ersten Werkzeuge eine gemeinsame erste Schnittebene haben, und die zweiten Werkzeuge eine gemeinsame zweiten Schnittebene haben, wobei die erste Schnittebene und die zweite Schnittebene vorzugsweise im Wesentlichen parallel zueinander verlaufen oder aufeinander liegen und vorzugsweise im Wesentlichen senkrecht zur Rotationsachse (Z) stehen.

In einer Ausführungsform können die ersten Werkzeuge eine gemeinsame erste Schnittebene haben, und können die zweiten Werkzeuge eine gemeinsame zweite Schnittebene haben, wobei die erste Schnittebene und die zweite Schnittebene parallel zueinander verlaufen.

In einer Ausführungsform können die ersten Werkzeuge derart angeordnet sein, dass sie in einer gemeinsamen ersten Schnittebene angeordnet sind, und können die zweiten Werkzeuge derart angeordnet sein, dass sie in einer gemeinsamen zweiten Schnittebene angeordnet sind, wobei die erste Schnittebene und die zweite Schnittebene parallel zueinander verlaufen.

Die erste Schnittebene und die zweite Schnittebene können sich senkrecht zur Rotationsachse erstrecken.

Die erste Schnittebene und die zweite Schnittebene können parallel zueinander verlaufen.

Beispielsweise können parallel verlaufende Schnitte in unterschiedlichen Abschnitten von Schichten des Kabels durch die ersten Werkzeuge und die zweiten Werkzeuge erzeugt werden, insbesondere ohne dass zwischen den Schnitten das Kabel bewegt werden muss.

Ein Vorteil kann sein, dass zwischen bestimmten Arbeitsschritten (Bearbeitungsschritten des Kabels) auf eine Längsverschiebung des zu bearbeitenden Kabels verzichtet werden kann. Vorteilhaft kann eine Zeitersparnis erfolgen. Ein Vorteil kann eine Verbesserung der Präzision sein.

Ein Vorteil kann sein, dass bei unterschiedlicher Anzahl von ersten und zweiten Werkzeugen eine Kollision der Werkzeuge vermieden werden kann. Als Beispiel dazu dient ein Bearbeitungskopf mit zwei Schneidwerkzeuge zum Durchtrennen eines Kabels ohne Rotation des Bearbeitungskopfes und drei Einschneidwerkzeuge zum rotativen Einschneiden einer Isolation.

In einer Ausführungsform können die ersten Werkzeuge eine gemeinsame erste Schnittebene haben, und können die zweiten Werkzeuge eine gemeinsame zweite Schnittebene haben, wobei die erste Schnittebene und die zweite Schnittebene aufeinander liegen.

In einer Ausführungsform können die ersten Werkzeuge in einer gemeinsamen ersten Schnittebene angeordnet sein, und können die zweiten Werkzeuge in einer gemeinsamen zweiten Schnittebene angeordnet sein, wobei die erste Schnittebene und die zweite Schnittebene aufeinander liegen.

Die erste Schnittebene und die zweite Schnittebene können sich senkrecht zur Rotationsachse erstrecken.

Beispielsweise können verschiedene Schnitte an derselben Position des Kabels durch die ersten Werkzeuge und die zweiten Werkzeuge erzeugt werden. Beispielsweise können verschiedene Modifikationen an derselben Position des Kabels (in Relation zur Rotationsache und/oder in Relation zur Längserstreckung des Kabels) durch die ersten Werkzeuge und die zweiten Werkzeuge erzeugt werden. Beispielsweise könnte der Kabelmantel durch die ersten Werkzeuge eingeschnitten werden und durch die zweiten Werkzeuge vom restlichen Kabel abgezogen werden.

Dies kann den Vorteil haben, dass zwischen manchen Arbeitsschritten (Bearbeitung des Kabels) auf eine Längsverschiebung des zu bearbeitenden Kabels verzichtet werden kann, was eine Zeitersparnis und/oder einen Präzisionsgewinn ergeben kann.

In einer Ausführungsform können komplementäre Punkte der ersten Werkzeuge und/oder komplementäre Punkte der zweiten Werkzeuge sich jeweils auf einer Kegelfläche um die Rotationsachse bewegen.

In einer Ausführungsform können sich komplementäre Punkte der ersten Werkzeuge und komplementäre Punkte der zweiten Werkzeuge auf einer gemeinsamen Kegelfläche um die Rotationsachse bewegen.

Komplementäre Punkte eines ersten ersten Werkzeuges und eines zweiten ersten Werkzeuges können dieselbe Stelle des jeweiligen ersten Werkzeuges beschreiben. Komplementäre Punkte eines ersten zweiten Werkzeuges und eines zweiten zweiten Werkzeuges können dieselbe Stelle des jeweiligen zweiten Werkzeuges beschreiben. Komplementäre Punkte der ersten Werkzeuge können jeweils dieselbe Stelle des jeweiligen ersten Werkzeuges beschreiben. Komplementäre Punkte der zweiten Werkzeuge können jeweils dieselbe Stelle des jeweiligen zweiten Werkzeuges beschreiben.

Jedes erste Werkzeug kann einen jeweiligen Beobachtungspunkt aufweisen, wobei jeder Beobachtungspunk an derselben Ortskoordinate des jeweiligen ersten Werkzeuges angeordnet ist. Jedes zweite Werkzeug kann einen jeweiligen Beobachtungspunkt aufweisen, wobei jeder Beobachtungspunk an derselben Ortskoordinate des jeweiligen zweiten Werkzeuges angeordnet ist.

In einer Ausführungsform können sich die Beobachtungspunkte der ersten Werkzeuge auf einer Kegelfläche um die Rotationsachse bewegen. In einer Ausführungsform können sich die Beobachtungspunkte der zweiten Werkzeuge auf einer Kegelfläche um die Rotationsachse bewegen. In einer Ausführungsform können sich die Beobachtungspunkte der ersten Werkzeuge und die Beobachtungspunkte der zweiten Werkzeuge auf einer gemeinsamen Kegelfläche um die Rotationsachse bewegen.

In einer Ausführungsform können die ersten Werkzeuge auf einem gemeinsamen ersten Schnittkegel angeordnet sein, und können die zweiten Werkzeuge auf einem gemeinsamen zweiten Schnittkegel angeordnet sein, wobei der erste Schnittkegel und der zweite Schnittkegel parallel zueinander verlaufen oder identisch sind.

Der erste Schnittkegel und der zweite Schnittkegel können einen stumpfen Winkel mit der Rotationsachse einschließen. Der erste Schnittkegel und der zweite Schnittkegel können einen spitzen Winkel mit der Rotationsachse einschließen.

Beispielsweise können parallel verlaufende Schnitte in unterschiedlichen Abschnitten von Schichten des Kabels durch die ersten Werkzeuge und die zweiten Werkzeuge erzeugt werden, insbesondere ohne, dass zwischen den Schnitten das Kabel bewegt werden muss.

Beispielsweise können verschiedene Schnitte an derselben Position des Kabels durch die ersten Werkzeuge und die zweiten Werkzeuge erzeugt werden. Beispielsweise können verschiedene Modifikationen an derselben Position des Kabels durch die ersten Werkzeuge und die zweiten Werkzeuge erzeugt werden.

In einer Ausführungsform kann jeder erste Pleuel eine erste Pleuellänge zwischen dem ersten Stellmittel-Pleuel-Gelenk und dem ersten Schlitten-Pleuel-Gelenk oder zwischen dem ersten Stellmittel-Pleuel-Gelenk und dem ersten Werkzeug-Pleuel-Gelenk aufweisen, und kann jeder zweite Pleuel eine zweite Pleuellänge zwischen dem zweiten Stellmittel-Pleuel-Gelenk und dem zweiten Schlitten-Pleuel-Gelenk oder zwischen dem zweiten Stellmittel-Pleuel-Gelenk und dem zweiten Werkzeug-Pleuel-Gelenk aufweisen, wobei die ersten Pleuellängen und die zweiten Pleuellängen gleich groß sind.

Ein Vorteil kann sein, dass die Geometrie vereinfacht und dadurch die Herstellkosten des rotativen Bearbeitungskopfes kostengünstiger sein kann.

Vorteilhaft können die gleiche Pleuellängen gleiche lineare Wege der ersten und zweiten Werkzeuge ermöglichen: Wenn die Kurbeltriebe in ihrer Form und Größe gleich sind, sind es auch die Linearbewegungen. Wenn die zweiten Kurbeltriebe spiegelsymmetrisch zu den ersten Kurbeltrieben ausgebildet sind, sind auch die linearen Wege (als Funktion des Verstellwinkels φ) der zweiten Werkzeuge spiegelsymmetrisch zu den linearen Wegen (als Funktion des Verstellwinkels φ) der ersten Werkzeuge.

In einer Ausführungsform kann sich die erste Pleuellänge zwischen dem ersten Stellmittel-Pleuel-Gelenk und dem ersten Schlitten-Pleuel-Gelenk erstrecken.

In einer Ausführungsform kann sich die erste Pleuellänge zwischen dem ersten Stellmittel-Pleuel-Gelenk und dem ersten Werkzeug-Pleuel-Gelenk erstrecken.

In einer Ausführungsform kann sich die zweite Pleuellänge zwischen dem zweiten Stellmittel-Pleuel-Gelenk und dem zweiten Schlitten-Pleuel-Gelenk erstrecken.

In einer Ausführungsform kann sich die zweite Pleuellänge zwischen dem zweiten Stellmittel-Pleuel-Gelenk und dem zweiten Werkzeug-Pleuel-Gelenk erstrecken.

In einer Ausführungsform kann sich die erste Pleuellänge zwischen dem ersten Stellmittel-Pleuel-Gelenk und dem ersten Schlitten-Pleuel-Gelenk erstrecken, und kann sich die zweite Pleuellänge zwischen dem zweiten Stellmittel-Pleuel-Gelenk und dem zweiten Schlitten-Pleuel-Gelenk erstrecken.

In einer Ausführungsform kann sich die erste Pleuellänge zwischen dem ersten Stellmittel-Pleuel-Gelenk und dem ersten Schlitten-Pleuel-Gelenk erstrecken, und kann sich die zweite Pleuellänge zwischen dem zweiten Stellmittel-Pleuel-Gelenk und dem zweiten Werkzeug-Pleuel-Gelenk erstrecken.

In einer Ausführungsform kann sich die erste Pleuellänge zwischen dem ersten Stellmittel-Pleuel-Gelenk und dem ersten Werkzeug-Pleuel-Gelenk erstrecken, und kann sich die zweite Pleuellänge zwischen dem zweiten Stellmittel-Pleuel-Gelenk und dem zweiten Schlitten-Pleuel-Gelenk erstrecken.

In einer Ausführungsform kann sich die erste Pleuellänge zwischen dem ersten Stellmittel-Pleuel-Gelenk und dem ersten Werkzeug-Pleuel-Gelenk erstrecken, und kann sich die zweite Pleuellänge zwischen dem zweiten Stellmittel-Pleuel-Gelenk und dem zweiten Werkzeug-Pleuel-Gelenk erstrecken.

In einer Ausführungsform können die ersten Pleuel identisch ausgeführt sein. In einer Ausführungsform können die zweiten Pleuel identisch ausgeführt sein. Ein Vorteil kann sein, dass Herstellungskosten reduziert werden können. In einer Ausführungsform können die ersten Pleuel und die zweiten Pleuel identisch ausgeführt sein. Ein Vorteil kann sein, dass Herstellungskosten reduziert sein können. In einer Ausführungsform können alle Pleuel identisch ausgeführt sein.

In einer Ausführungsform können sich die ersten Pleuel von den zweiten Pleueln unterscheiden. Die ersten Pleuel können sich in der Form von dem zweiten Pleuel unterscheiden. Die ersten Pleuel können sich in ihrer Funktion von dem zweiten Pleuel unterscheiden.

In einer Ausführungsform kann ein erster Teilkreisradius zwischen der Rotationsachse und jedem ersten Stellmittel-Pleuel-Gelenk und ein zweiter Teilkreisradius zwischen der Rotationsachse und jedem zweiten Stellmittel-Pleuel-Gelenk gleich groß sein.

In einer Ausführungsform kann jeder erste Teilkreisradius zwischen der Rotationsachse und jedem ersten Stellmittel-Pleuel-Gelenk und jeder zweite Teilkreisradius zwischen der Rotationsachse und jedem zweiten Stellmittel-Pleuel-Gelenk gleich groß sein.

Der erste Teilkreisradius, der mit einem ersten Pleuel assoziiert sein kann, kann sich zwischen der Rotationsachse und dem ersten Stellmittel-Pleuel-Gelenk des ersten Pleuels erstrecken.

Der zweite Teilkreisradius, der mit einem zweiten Pleuel assoziiert sein kann, kann sich zwischen der Rotationsachse und dem zweiten Stellmittel-Pleuel-Gelenk des zweiten Pleuels erstrecken.

Der erste Teilkreisradius und der zweite Teilkreisradius können vom Betrag her gleich groß sein.

Das erste Stellmittel-Pleuel-Gelenk und das zweite Stellmittel-Pleuel-Gelenk können mit demselben Abstand zu der Rotationsachse angeordnet sein.

Die Rotationsachse kann durch die Drehachse des Stellmittels verlaufen. Das Stellmittel kann beispielsweise als Stellring ausgebildet sein.

Ein Vorteil kann sein, dass die ersten Werkzeuge und die zweiten Werkzeuge dieselbe Strecke in Relation zur Drehachse des Stellmittels (in Relation zur Rotationsachse) zum Öffnen und/oder Zustellen zurücklegen. Die Bearbeitungsschritte, die durch die ersten und zweiten Werkzeuge vermittelt werden können, können vorteilhaft besonders einfach aufeinander abgestimmt werden.

In einer Ausführungsform können für alle ersten Kurbeltriebe Wirklinien der ersten Schlitten sich mit den zugehörigen ersten Teilkreisradien zu den ersten Stellmittel-Pleuel-Gelenken unter einem ersten Stell-Start-Winkel λ1 schneiden und für alle zweiten Kurbeltriebe Wirklinien der zweiten Schlitten sich mit den zugehörigen zweiten Teilkreisradien zu den zweiten Stellmittel-Pleuel-Gelenken unter einem zweiten Stell-Start-Winkel λ2 schneiden, wobei der erste Stell-Start-Winkel λ1 und der zweite Stell-Start-Winkel λ2 vorzugsweise in einer Neutralstellung betragsgleich und einander entgegengesetzt sind.

In einer Ausführungsform kann sich eine Wirklinie des ersten Schlittens und der erste Teilkreisradius zum ersten Stellmittel-Pleuel-Gelenk für alle ersten Kurbeltriebe unter einem ersten Stell-Start-Winkel λ1 schneiden und sich eine Wirklinie des zweiten Schlittens und der zweite Teilkreisradius zum zweiten Stellmittel-Pleuel-Gelenk für alle zweiten Kurbeltriebe unter einem zweiten Stell-Start-Winkel λ2 schneiden, wobei die ersten Stell-Start-Winkel λ1 und die zweiten Stell-Start-Winkel λ2 vorzugsweise in einer Neutralstellung betragsgleich und einander entgegengesetzt sind.

Die ersten Teilkreisradien zu den ersten Stellmittel-Pleuel-Gelenken und die Wirklinien der ersten Schlitten können den erste Stell-Start-Winkel einschließen. Die zweiten Teilkreisradien zu den zweiten Stellmittel-Pleuel-Gelenken und die Wirklinien der zweiten Schlitten können den zweiten Stell-Start-Winkel einschließen.

Der erste Teilkreisradius und die Wirklinie des ersten Schlittens können den erste Stell-Start-Winkel einschließen. Der zweite Teilkreisradius und die Wirklinie des zweiten Schlittens können den zweiten Stell-Start-Winkel einschließen.

In der Neutralstellung (Symmetriestellung) können der erste Stell-Start-Winkel und der zweite Stell-Start-Winkel betragsgleich sein. In der Neutralstellung können der erste Stell-Start-Winkel und der zweite Stell-Start-Winkel unterschiedliche Vorzeichen aufweisen.

Die Neutralstellung kann die Stellung des Stellmittels sein, in der der Verstellwinkel φ = 0° beträgt.

In einer Ausführungsform können für alle ersten Kurbeltriebe Wirklinien der ersten Schlitten sich mit den zugehörigen ersten Teilkreisradien zu den ersten Stellmittel-Pleuel-Gelenken unter einem ersten Stell-Start-Winkel λ1 schneiden und für alle zweiten Kurbeltriebe Wirklinien der zweiten Schlitten sich mit den zugehörigen zweiten Teilkreisradien zu den zweiten Stellmittel-Pleuel-Gelenken unter einem zweiten Stell-Start-Winkel λ2 schneiden, wobei der ersten Stell-Start-Winkel λ1 und der zweiten Stell-Start-Winkel λ2 vorzugsweise beim Verstellwinkel φ = 0° betragsgleich und einander entgegengesetzt sind.

In einer Ausführungsform können für alle ersten Kurbeltriebe Wirklinien der ersten Schlitten sich mit den zugehörigen ersten Teilkreisradien zu den ersten Stellmittel-Pleuel-Gelenken unter einem ersten Stell-Start-Winkel λ1 schneiden und für alle zweiten Kurbeltriebe Wirklinien der zweiten Schlitten sich mit den zugehörigen zweiten Teilkreisradien zu den zweiten Stellmittel-Pleuel-Gelenken unter einem zweiten Stell-Start-Winkel λ2 schneiden, wobei der ersten Stell-Start-Winkel λ1 und der zweiten Stell-Start-Winkel λ2 vorzugsweise beim Verstellwinkel φ = 0° betragsgleich und einander entgegengesetzt sind.

In einer Ausführungsform können die ersten Pleuel und die jeweiligen Linearführungen einen für alle ersten Pleuel gleichen ersten Winkel einschließen und die zweiten Pleuel und die jeweiligen Linearführungen einen für alle zweiten Pleuel gleichen zweiten Winkel einschließen, wobei die ersten und die zweiten Winkel vorzugsweise in der Neutralstellung betragsgleich und einander entgegengesetzt sind.

In einer Ausführungsform können die erste Linearbewegung und die zweite Linearbewegung in der Neutralstellung (Symmetriestellung) mit dergleichen Geschwindigkeit erfolgen. In einer Ausführungsform können die ersten Werkzeuge und die zweiten Werkzeuge in der Neutralstellung mit dergleichen Geschwindigkeit zugestellt und/oder geöffnet werden.

In einer Ausführungsform können in der Neutralstellung die erste Linearbewegung und die zweite Linearbewegung gleichzeitig und mit gleicher Geschwindigkeit in entgegengesetzte Richtungen verlaufen. Für den ersten Verstellbereich können die erste Linearbewegung und die zweite Linearbewegung gleichzeitig in entgegengesetzte Richtungen verlaufen. Für den ersten Verstellbereich können die ersten Werkzeuge und die zweiten Werkzeuge gleichzeitig in entgegengesetzte Richtungen bewegt werden.

In einer Ausführungsform können die erste Linearbewegung und die zweite Linearbewegung in der Neutralstellung (Symmetriestellung) mit dergleichen Beschleunigung erfolgen.

In einer Ausführungsform können die ersten Werkzeuge erste Messer sein.

In einer Ausführungsform können die zweiten Werkzeuge zweite Messer sein.

In einer Ausführungsform können die ersten Werkzeuge erste Messer sein und können die zweiten Werkzeuge zweite Messer sein.

Die ersten Messer können Rundmesser sein. Die zweiten Messer können Rundmesser sein.

Die ersten Werkzeuge können ein erstes Werkzeugset bilden. Die zweiten Werkzeuge können ein zweites Werkzeugset bilden.

In einer Ausführungsform kann die Anzahl der ersten Messer verschieden von der Anzahl der zweiten Messer sein. In einer Ausführungsform kann die Anzahl der ersten Messer identisch mit der Anzahl der zweiten Messer sein.

In einer Ausführungsform können die ersten Werkzeuge zwei erste Messer aufweisen. In einer Ausführungsform können die ersten Werkzeuge drei erste Messer aufweisen. In einer Ausführungsform können die zweiten Werkzeuge zwei zweite Messer aufweisen. In einer Ausführungsform können die zweiten Werkzeuge drei zweite Messer aufweisen.

In einer Ausführungsform können die ersten Werkzeuge zwei erste Messer aufweisen und die zweiten Werkzeuge zwei zweite Messer aufweisen. In einer Ausführungsform können die ersten Werkzeuge drei erste Messer aufweisen und die zweiten Werkzeuge drei zweite Messer aufweisen. In einer Ausführungsform können die ersten Werkzeuge zwei erste Messer aufweisen und die zweiten Werkzeuge drei zweite Messer aufweisen. In einer Ausführungsform können die ersten Werkzeuge drei erste Messer aufweisen und die zweiten Werkzeuge zwei zweite Messer aufweisen.

In einer Ausführungsform können die ersten Werkzeuge und/oder die zweiten Werkzeuge Abtastmesser sein. In einer Ausführungsform können die ersten Werkzeuge und/oder die zweiten Werkzeuge Abtast-Abrollmesser sein.

In einer Ausführungsform kann das Abtastmesser oder Abtast-Abrollmesser elektrisch mit einem Berührungsdetektor zur Erkennung einer Berührung des Abtast-Abrollmessers mit einer vorgegebenen Kabelschicht des Kabels verbunden sein. Der Berührungsdetektor kann mit einer Steuervorrichtung und/oder einer Regelvorrichtung und/oder einer Datenspeichervorrichtung verbunden sein.

In einer Ausführungsform kann die Kabelbearbeitungsvorrichtung mit einem Abtast-Abrollmesser dazu ausgebildet sein, die Kontur der vorgegebenen Kabelschicht in der Schnittebene in Bezug auf die Rotationsachse und in Bezug auf den Rotationswinkel des Abtast-Abrollmessers abzutasten. In einer Ausführungsform können Kontur-Daten für die Ansteuerung und/oder Regelung nachfolgender Bearbeitungsschritte, insbesondere mit derselben Kabelbearbeitungsvorrichtung, am selben Kabel in der Steuervorrichtung und/oder der Regelvorrichtung und/oder der Datenspeichervorrichtung abgespeichert werden.

In einer Ausführungsform können aus den Kontur-Daten die Verstellwinkel für die ersten und/oder zweiten Werkzeuge bestimmt werden. In einer Ausführungsform können aus den Kontur-Daten die Messerzustelldaten für den Bearbeitungskopf für weitere, folgende Bearbeitungsschritte bestimmt werden.

Unter Konturdaten können Encoderwerte der Antriebe zur Rotation des Bearbeitungskopfes als Prozessrohdaten zum Zeitpunkt einer Werkzeug-Leiter-Berührung verstanden werden. Unter Konturdaten können Encoderwerte der Antriebe zur Verstellung des Stellmittels als Prozessrohdaten zum Zeitpunkt einer Werkzeug-Leiter-Berührung verstanden werden. Unter Konturdaten können auch Encoderwerte der Antriebe zur Rotation des Bearbeitungskopfes und zur Verstellung des Stellmittels als Prozessrohdaten zum Zeitpunkt einer Werkzeug-Leiter-Berührung verstanden werden. Konturdaten ermöglichen das wiederholte Umkreisen des abtastenden Werkzeuges auf dem Radius in Funktion des Rotationswinkels, bei dem eine Werkzeug-Leiter-Berührung detektiert wurde.

In einer Ausführungsform können die ersten Werkzeuge und/oder die zweiten Werkzeuge Abzugswerkzeuge (Abziehwerkzeuge) sein. In einer Ausführungsform können die ersten Werkzeuge und/oder die zweiten Werkzeuge Aufweitwerkzeuge sein.

In einer Ausführungsform können die ersten Werkzeuge und/oder die zweiten Werkzeuge als Mantelhalter ausgebildet sein.

Ein Werkzeugset kann für eine Bearbeitungsfunktion ausgelegt sein. Die Werkzeuge (erste Werkzeuge, zweite Werkzeuge) können entsprechend dem Kabel und der beabsichtigten Bearbeitung ausgewählt und der rotative Bearbeitungskopf dementsprechend bestückt werden. Beispielsweise kann ein erstes Werkzeugset drei Abroll-Abtastmesser aufweisen und ein zweites Werkzeugset drei Abzugwerkzeuge. Ein Werkzeugset kann in einer Ausführungsform aus einem scharfen Abroll-Abtastmesser und zwei stumpfen Abrollmessern als Gegenhalter für ein Einschneiden des Mantels und Abtasten der Schirmfolienkontur mit anschließender Perforation der Folie bestehen und das zweite Werkzeugset kann zum Abziehen des Mantels mit anschließendem Aufweiten des Schirmgeflechtes ausgebildet sein.

In einer Ausführungsform können die ersten Werkzeuge und/oder die zweiten Werkzeuge als Längs-Schlitzwerkzeuge ausgebildet sein. Längs-Schlitzwerkzeuge können zum Aufschlitzen des Kabelmantels in axialer Richtung, insbesondere ohne Rotation des Bearbeitungskopfes, ausgebildet sein. In einer Ausführungsform kann dazu das Kabel bei zugestellten Schlitzwerkzeugen durch den Bearbeitungskopf, insbesondere den Kabelbearbeitungsraum, gezogen werden. Dabei kann die Schneide als abrollendes Rundmesser oder nicht abrollend ausgeführt sein, insbesondere mit entsprechenden Gegenhalterollen.

In einer Ausführungsform können die ersten Werkzeuge und/oder die zweiten Werkzeuge als Wendel-Schlitz-Werkzeuge ausgebildet sein. Wendel-Schlitz-Werkzeuge können zum wendelförmigen Einschneiden und/oder wendelförmigen Aufschneiden des Kabelmantels um die Kabellängsachse ausgebildet sein. Dabei kann die Schneide abrollend oder ziehend ausgeführt sein. Das Verhältnis der Rotationsgeschwindigkeit zur Axialbewegung des Kabels kann gegenüber dem Schneidkopf entsprechend koordiniert sein. Bei einem spiralförmigen Schlitzen/Schneiden kann die Steigung, die sich aus dem Kabelvorschub, der Rotationsgeschwindigkeit und des Bearbeitungsumfanges ergibt, an die Steigung des Werkzeuges angepasst sein.

Ein zweiter Aspekt der Erfindung betrifft eine Kabelbearbeitungsvorrichtung, wobei die Kabelbearbeitungsvorrichtung einen rotativen Bearbeitungskopf gemäß der Erfindung und eine Antriebeinrichtung zum Antreiben des Stellmittels aufweist.

Ein Aspekt der Erfindung betrifft eine Kabelbearbeitungsvorrichtung, wobei die Kabelbearbeitungsvorrichtung einen rotativen Bearbeitungskopf gemäß der Erfindung und eine Antriebeinrichtung zum Antreiben der Rotorbasis und des Stellmittels aufweist.

In einer Ausführungsform kann die Rotorbasis mit einem ersten Motor und das Stellmittel mit einem zweiten Motor separat jedoch mit zueinander regelbarer Winkellage angetrieben werden.

Die Antriebseinrichtung kann operativ mit dem Stellmittel verbunden sein. Die Antriebseinrichtung kann einen Motor aufweisen. Die Antriebseinrichtung kann zwei Motoren aufweisen. Die Antriebseinrichtung kann einen ersten Motor und einen zweiten Motor aufweisen. Die Antriebseinrichtung kann dazu eingerichtet sein, mit dem ersten Motor die Rotorbasis und mit dem zweiten Motor das Stellmittel separat mit gleicher Drehzahl (synchron) jedoch mit zueinander regelbarer Winkellage anzutreiben. Der Vorteil der mechanisch entkoppelten Motoren ist die kostengünstige und mechanisch einfache Ausführung.

In einer Ausführungsform kann die Rotorbasis mit einem ersten Motor und das Stellmittel über ein Drehzahl-Überlagerungsgetriebe angetrieben werden, wobei das Drehzahl-Überlagerungsgetriebe durch den ersten Motor und einen zweiten Motor angetrieben wird.

In einer Ausführungsform kann das Stellmittel mit dem ersten Motor und die Rotorbasis über ein Drehzahl-Überlagerungsgetriebe angetrieben werden, wobei das Drehzahl-Überlagerungsgetriebe durch den ersten Motor und einen zweiten Motor angetrieben wird.

Das synchrone jedoch zueinander winkelverstellbare Antreiben der Rotorbasis und des Stellmittels kann durch ein Drehzahl-Überlagerungsgetriebe erfolgen. Das Drehzahl-Überlagerungsgetriebe kann zwei Antriebe und einen Abtrieb besitzen. Die Drehzahl des Abtriebes kann dabei die Überlagerung der Drehzahlen der beiden Antriebe mit unterschiedlichen Übersetzungsverhältnissen sein. So kann das Stellmittel mechanisch synchronisiert zur Drehzahl der Rotorbasis angetrieben werden, jedoch mit justierbarem Verstellwinkel, der nur von der Drehzahl eines Motors abhängig ist.

Beispielsweise kann der erste Antrieb des Drehzahl-Überlagerungsgetriebes mit der Drehzahl n1 und der zweite Antrieb des Drehzahl-Überlagerungsgetriebes mit der Drehzahl n2 angetrieben werden. In diesem Beispiel könnte sich die Drehzahl n3 des Abtriebes des Drehzahl-Überlagerungsgetriebes ergeben als n3 = n1/gr13 + n2/gr23, wobei gr13 das Übersetzungsverhältnis der Drehzahl des ersten Antriebes n1 zur Drehzahl des Abtriebes n3 ist (gr13 = n1 / n3), bei stillstehendem zweiten Antrieb (n2 = 0) und
wobei gr23 das Übersetzungsverhältnis der Drehzahl des zweiten Antriebes n2 zur Drehzahl des Abtriebes n3 ist (gr23 = n2 / n3), bei stillstehendem ersten Antrieb n1 = 0.

In einer Ausführungsform ist vorgesehen, dass damit die Drehzahl des Stellmittels n7 dieselbe ist wie diejenige der Rotorbasis n6, die Übersetzung des Drehzahl-Überlagerungsgetriebes gr13 mit der Übersetzung gr16 (von der Drehzahl des ersten Antriebes des Drehzahl-Überlagerungsgetriebes n1 zur Drehzahl der Rotorbasis n6) und der Übersetzungen gr37 (von der Drehzahl des Abtriebes des Drehzahl-Überlagerungsgetriebes n3 zur Drehzahl des Stellmittels n7) kompensiert werden muss, insbesondere gemäß:
gr16 = gr13 x gr37.

Ein Vorteil der Verwendung eines Drehzahl-Überlagerungsgetriebes kann sein, dass die beiden Motoren funktionell getrennt sind. Ein erster Motor ist nur für die synchrone, mechanisch gekoppelte Rotation der Rotorbasis und des Stellmittels zuständig und ein zweiter Motor ist nur für den Verstellwinkel zwischen der Rotorbasis und dem Stellmittel zuständig. Ein regeltechnisch schwieriges synchronisieren des ersten und des zweiten Motors mit exakt geregelter Winkellage zueinander entfällt, da die synchrone Rotation durch die mechanische Koppelung gegeben ist.

In einer Ausführungsform kann die Rotorbasis über einen ersten Zahnriemen und das Stellmittel über einen zweiten Zahnriemen angetrieben werden, wobei der erste Zahnriemen und der zweite Zahnriemen von einem ersten Motor angetrieben werden, wobei der erste Zahnriemen und/oder der zweite Zahnriemen mit einer Umlenkrolle und einer Spannrolle umgelenkt, vorzugsweise tailliert werden, wobei durch einen zweiten Motor durch Verschieben mindestens einer Umlenkrolle der Stellwinkel (φ) einstellbar ist.

In einer Ausführungsform kann das mechanisch gekoppelte und synchrone, winkelgenaue Antreiben der Rotorbasis und des Stellmittels mit Zahnriemen erreicht werden, wobei die Rotorbasis über einen ersten Zahnriemen und das Stellmittel über einen zweiten Zahnriemen gemeinsam von einem ersten Motor angetrieben werden, wobei der erste und/oder der zweite Zahnriemen mit einer Umlenkrolle und einer Spannrolle umgelenkt, vorzugsweise tailliert wird/werden, wobei durch Verschieben mindestens einer Umlenkrolle mit einem zweiten Motor der Stellwinkel (φ) einstellbar ist.

Ein Vorteil der Methode des Verschiebens mindestens einer Umlenkrolle zum Umlenken eines Zahnriemens kann sein, dass ein erster Motor nur für die synchrone, mechanisch gekoppelte Rotation der Rotorbasis und des Stellmittels zuständig ist und ein zweiter Motor nur für das Umlenken mindestens eines Zahnriemens und somit für den Verstellwinkel zwischen der Rotorbasis und dem Stellmittel zuständig ist. Ein regeltechnisch schwieriges synchronisieren zweier Motoren mit exakt geregelter Winkellage zueinander entfällt.

Ein weiterer Aspekt der Erfindung betrifft ein Verfahren zum Bearbeiten eines Kabels, insbesondere zum Perforieren, Einschneiden und/oder Durchschneiden zumindest einer Schicht eines mehrschichtigen Kabels. Das Verfahren kann die Schritte aufweisen:
- Bereitstellen des Bearbeitungskopfes gemäß der Erfindung und/oder Bereitstellen der Kabelbearbeitungsvorrichtung gemäß der Erfindung,
- Einführen des Kabels in den Kabelbearbeitungsraum,
- einen Stellschritt, in dem das Stellmittel um die Rotationsachse gedreht wird, so dass über den Verstellmechanismus die ersten Werkzeuge in den jeweiligen ersten Linearbewegungen und gleichzeitig die zweiten Werkzeuge in den jeweiligen zweiten Linearbewegungen durch das Stellmittel bewegt werden.

In einer Ausführungsform kann das Verfahren mit einem rotierenden Bearbeitungskopf erfolgen, an welchem wenigstens ein Abrollmesser angebracht ist. Das Verfahren kann die Schritte aufweisen:
messen und/oder steuern und/oder regeln der Distanz des Abrollmessers zur Rotationsachse,
abtasten des Kabels und/oder der bestimmten Schicht des Kabels, insbesondere um deren Konturdaten festzustellen,
ableiten von Messerzustellbefehlen aus den Konturdaten,
zustellen des Abtast-Messers entsprechend der Messerzustellbefehle,
bearbeiten und/oder perforieren und/oder einschneiden und/oder durchschneiden der bestimmten Schicht des Kabels in Abhängigkeit der abgetasteten Kontur der bestimmten Schicht.

Die Konturdaten können die räumliche Erstreckung des Kabels und/oder der bestimmten Schicht des Kabels beschreiben.

Weitere Merkmale und Vorteile der Erfindung werden nachfolgend anhand der Figurenbeschreibung von Ausführungsbeispielen erläutert. Es zeigen:
- Figur 1: eine Rückansicht eines beispielhaften schematischen Verstellmechanismus,
- Figur 2: eine perspektivische Frontansicht des beispielhaften schematischen Verstellmechanismus aus Figur 1,
- Figur 3: eine perspektivische Rückansicht des beispielhaften schematischen Verstellmechanismus aus Figur 1,
- Figur 4: einen Ausschnitt der Figur 1,
- Figur 5: einen Ausschnitt der Figur 1,
- Figur 6: eine perspektivische Rückansicht eines beispielhaften schematischen Ausführungsform eines Verstellmechanismus mit Pleuelpaaren,
- Figur 7: eine Schnittansicht des beispielhaften schematischen Bearbeitungskopfes aus Figur 6,
- Figur 8: (A) ein Verstellwinkel-Öffnungsdurchmesser-Diagramm des beispielhaften Verstellmechanismus der Figuren 1 bis 5; (B) ein Verstellwinkel-Öffnungsdurchmesser-Diagramm des beispielhaften Verstellmechanismus der Figuren 6 und 7,
- Figur 9: eine perspektivische Rückansicht eines beispielhaften schematischen Verstellmechanismus mit asymmetrischen Pleueln,
- Figur 10: einen Ausschnitt des beispielhaften schematischen Verstellmechanismus aus Figur 9,
- Figur 11: eine Rückansicht eines beispielhaften schematischen Verstellmechanismus mit zwei ersten Messern und zwei zweiten Messern,
- Figur 12: eine perspektivische Frontansicht eines beispielhaften schematischen Bearbeitungskopfes mit drei ersten Messern und zwei zweiten Messern,
- Figur 13: eine Rückansicht des beispielhaften schematischen Bearbeitungskopfes aus Figur 12,
- Figur 14A: eine perspektivische Ansicht eines Bearbeitungskopfes mit einem beispielhaften schematischen Verstellmechanismus,
- Figur 14B: eine Schnittansicht des Bearbeitungskopfes der Figur 14A (ohne Zahnriemenräder und Lagerung),
- Figur 15: eine Rückansicht des Verstellmechanismus der im Bearbeitungskopf gemäß Figur 14A verbaut ist,
- Figur 16: eine Detailansicht des Schnittes durch die Federkontakte der Figur 14B,
- Figur 17: eine Schnittansicht des beispielhaften Bearbeitungskopfes aus Figur 14A durch die erste Segmentschraube,
- Figur 18: eine Rückansicht eines beispielhaften schematischen Verstellmechanismus mit verschiedenen Pleueln,
- Figur 19: eine perspektivische Rückansicht eines beispielhaften schematischen Verstellmechanismus,
- Figur 20: eine Frontansicht eines beispielhaften schematischen Verstellmechanismus mit zur Rotationsachse versetzten die Schlittenwirklinien,
- Figur 21: eine perspektivische Frontansicht des beispielhaften schematischen Bearbeitungskopfes aus Figur 20, und
- Figur 22: eine schematische Darstellung eines Antriebes der Rotorbasis und des Verstellmittels über ein Drehzahl-Überlagerungsgetriebe.

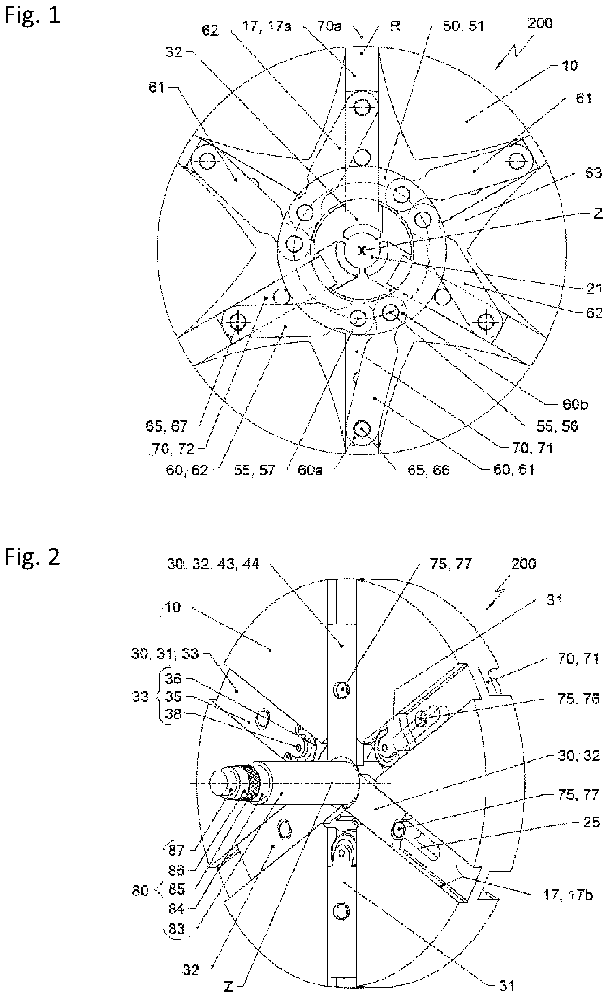

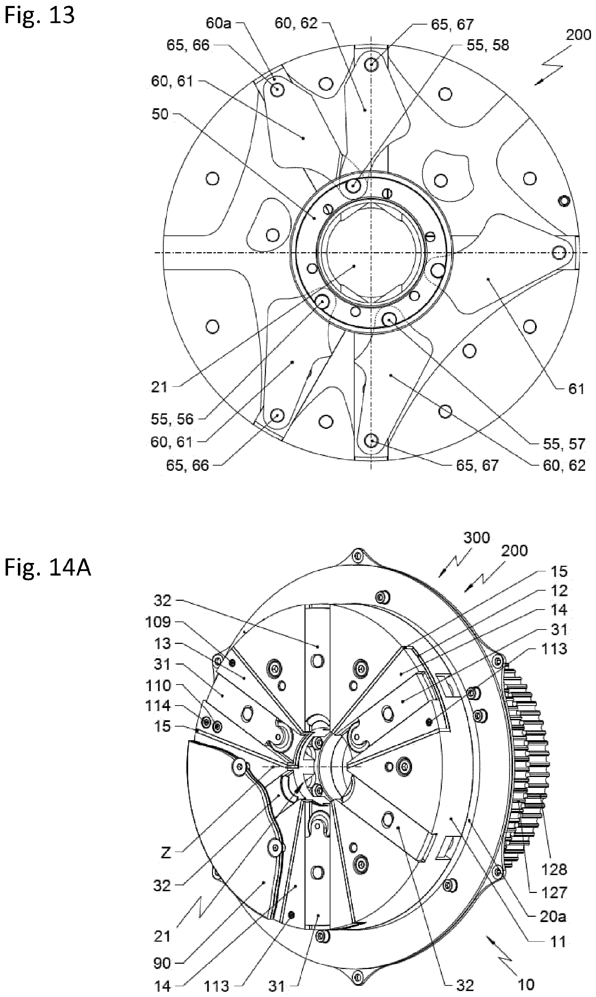

In der Figur 14A ist beispielhaft ein Bearbeitungskopf 300 mit einem beispielhaften Verstellmechanismus 200 schematisch dargestellt. Der Bearbeitungskopf 300 weist einen Verstellmechanismus 200 auf. In den Figuren 1 bis 7, 9 bis 13, 15 und 18 bis 21 sind verschiedene Ausführungsformen beispielhafter Verstellmechanismen 200 illustriert.

Der Bearbeitungskopf 300 kann zur Bearbeitung eines Kabels 80 ausgebildet sein. Ein beispielhaftes Kabel 80 kann einen zentralen Leiter 87 aufweisen. Das beispielhafte Kabel 80 kann ein Dielektrikum 86 aufweisen, das um den zentralen Leiter 87 herum angeordnet ist. Das beispielhafte Kabel 80 kann ein Schirmgeflecht 85 aufweisen. Das beispielhafte Kabel 80 kann eine Schirmfolie 84 aufweisen. Das Schirmgeflecht 85 kann zwischen dem Dielektrikum 86 und der Schirmfolie 84 angeordnet sein. Das beispielhafte Kabel 80 kann einen Kabelmantel 83 aufweisen. Der Kabelmantel 83 kann um die Schirmfolie 84 herum angeordnet sein. Der Kabelmantel 83 kann die äußere Begrenzung des Kabels 80 bilden (siehe insbesondere Figur 2).

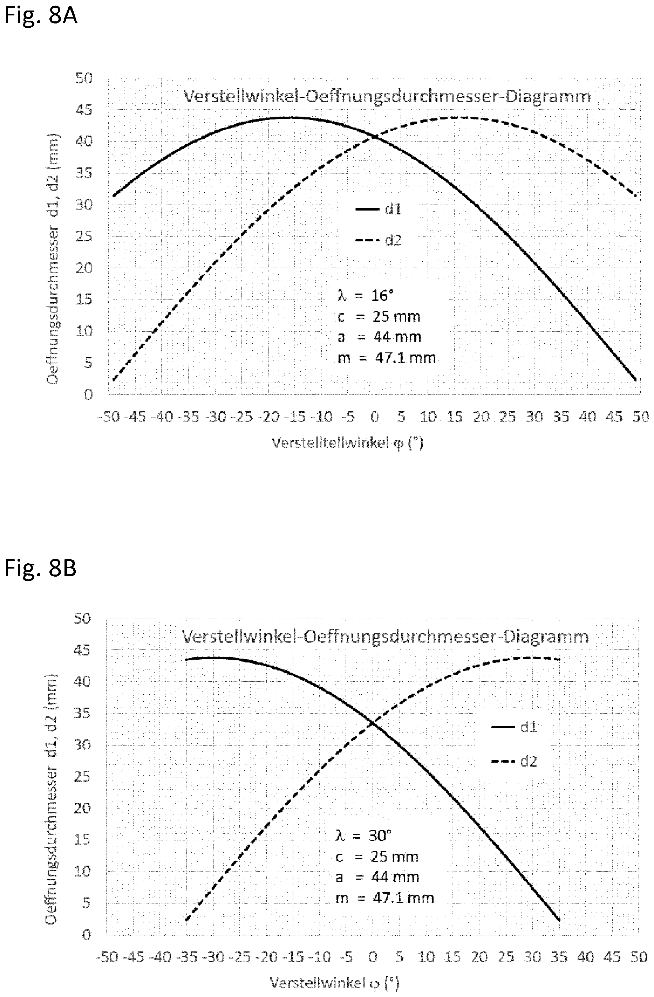

Der Bearbeitungskopf 300 kann einen Verstellmechanismus 200, eine Vielzahl erster Werkzeuge 31 und eine Vielzahl zweiter Werkzeuge 32 aufweisen. Der Verstellmechanismus 200 kann eine Vielzahl Pleuel 60, 61, 62 aufweisen. Der Verstellmechanismus 200 kann ein Stellmittel 50, beispielsweise einen Stellring 51, aufweisen. Die Vielzahl Pleuel 60, 61, 62 kann die Vielzahl erster Werkzeuge 31 und die Vielzahl zweiter Werkzeuge 32 mit dem Stellmittel 50 verbinden. Der Verstellmechanismus 200 kann dazu ausgebildet sein, eine Drehbewegung des Stellmittels 50 in eine radiale Bewegung der ersten Werkzeuge 31 und eine radiale Bewegung der zweiten Werkzeuge 32 zu übertragen. Der Verstellmechanismus 200 kann dazu ausgebildet sein, eine Drehbewegung des Stellmittels 50 über die Vielzahl an Pleueln 60, 61, 62 in radiale Bewegungen der ersten Werkzeuge 31 und in radiale Bewegungen der zweiten Werkzeuge 32 zu übertragen. Der Verstellmechanismus 200 kann dazu ausgebildet sein, eine Drehbewegung des Stellmittels 50 über die Vielzahl an Pleueln 60, 61, 62 in zumindest lineare Bewegungen der ersten Werkzeuge 31 und in zumindest lineare Bewegungen der zweiten Werkzeuge 32 zu übertragen. Insbesondere können die ersten Werkzeuge 31 und die zweiten Werkzeuge 32 gleichzeitig bewegbar sein. Insbesondere können die Bewegungen der ersten Werkzeuge 31 und die Bewegungen der zweiten Werkzeuge 32 zumindest über einen ersten Verstellbereich (Verstellwinkelbereich; vorgegebener Drehwinkelbereich) des Stellmittels 50 gegenläufig sein, insbesondere in Relation zur Rotationsachse Z. Im ersten Verstellbereich kann eine Drehung des Stellmittels 50 eine Bewegung der ersten Werkzeuge 31 in Richtung der Rotationsachse Z und eine Bewegung der zweiten Werkzeuge 32 von der Rotationsachse Z weg, vermitteln. Im ersten Verstellbereich kann eine Drehung des Stellmittels 50 eine Bewegung der zweiten Werkzeuge 32 in Richtung der Rotationsachse Z und eine Bewegung der ersten Werkzeuge 31 von der Rotationsachse Z weg, vermitteln (siehe auch Figs 8A, 8B).

In den gezeigten Ausführungsformen kann der Bearbeitungskopf 300 einen Kabelbearbeitungsraum 21 aufweisen. Der Kabelbearbeitungsraum 21 kann zentral in dem Bearbeitungskopf 300 angeordnet sein. Der Kabelbearbeitungsraum 21 kann zentral in Bezug zum Verstellmechanismus 200 angeordnet sein. Das Kabel 80 kann in den Kabelbearbeitungsraum 21 eingeführt werden (siehe insbesondere Figur 2).

Eine Rotationsachse Z kann durch den Kabelbearbeitungsraum 21 verlaufen. Der Bearbeitungskopf 300 kann um die Rotationsachse Z drehbar sein. Der Verstellmechanismus 200 kann um die Rotationsachse Z drehbar sein. Das Stellmittel 50 kann um die Rotationsachse Z drehbar sein. In einer Ausführungsform kann das Kabel 80 entlang der Rotationsachse Z in den Kabelbearbeitungsraum 21 einführbar sein. Wenn das Kabel 80 in dem Kabelbearbeitungsraum 21 angeordnet ist, können die Rotationsachse Z und die Längsachse des Kabels 80 zusammenfallen. Die Rotationsachse Z kann fluchtend mit der Kabelachse sein. Die Rotationsachse Z kann fluchtend mit einem Kabelhalter sein. Ein Kabelhalter (in den Figuren nicht gezeigt) kann beispielsweise ein Greifer eines Roboterarmes sein. Der Kabelhalter kann in einer Ausführungsform durch die Zentrierung vor der Deckscheibe (vor den Werkzeugen) realisiert sein. Der Kabelhalter kann in einer Ausführungsform durch die Zentrierung koaxial im Bearbeitungskopf (hinter den Werkzeugen) realisiert sein.

Der Bearbeitungskopf 300 kann eine Vielzahl erster Werkzeuge 31 aufweisen. Der Bearbeitungskopf 300 kann eine Vielzahl zweiter Werkzeuge 32 aufweisen. Die Vielzahl erster Werkzeuge 31 kann ein erstes Werkzeugset ausbilden. Die Vielzahl zweiter Werkzeuge 32 kann ein zweites Werkzeugset ausbilden.

Die ersten Werkzeuge 31 und die zweiten Werkzeuge 32 können um den Kabelbearbeitungsraum 21 herum angeordnet sein. Die Vielzahl erster Werkzeuge 31 kann in gleichmäßigen Abständen um den Kabelbearbeitungsraum 21 angeordnet sein. Die Vielzahl zweiter Werkzeuge 32 kann in gleichmäßigen Abständen um den Kabelbearbeitungsraum 21 angeordnet sein. Die Vielzahl der ersten Werkzeuge 31 kann entlang der Umfangsrichtung des Stellmittels 50 äquidistant angeordnet sein. Die Vielzahl der ersten Werkzeuge 31 kann bezüglich der Rotationsachse gleichwinklig verteilt angeordnet sein. Die Vielzahl der zweiten Werkzeuge 32 kann entlang der Umfangsrichtung des Stellmittels 50 äquidistant angeordnet sein. Die Vielzahl der zweiten Werkzeuge 32 kann bezüglich der Rotationsachse gleichwinklig verteilt angeordnet sein.

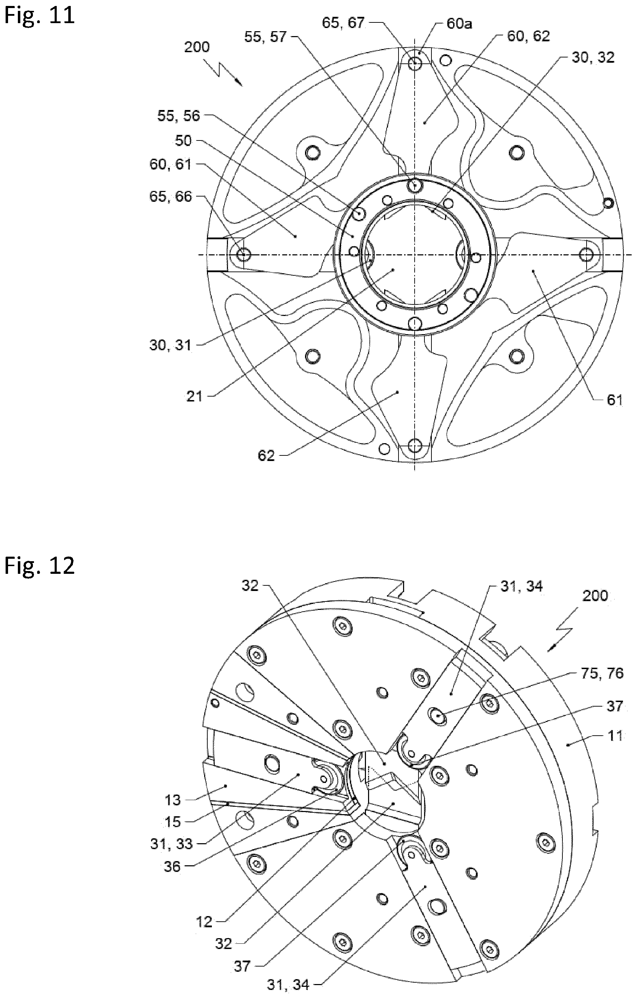

Die Anzahl erster Werkzeuge 31 kann gleich der Anzahl zweiter Werkzeuge 32 sein (siehe insbesondere Figuren 1, 2, 3, 6, 9, 10, 11, 14, 15, 19, 20, 21). Die Anzahl der ersten Werkzeuge 31 kann von der Anzahl der zweiten Werkzeuge 32 abweichen (siehe insbesondere Figuren 12, 13, 18). Die Anzahl der ersten Werkzeuge 31 kann geringer oder größer sein als die Anzahl der zweiten Werkzeuge 32.

In einer Ausführungsform können drei erste Werkzeuge 31 und drei zweite Werkzeuge 32 mit dem Verstellmechanismus 200 eines Bearbeitungskopfes 300 assoziiert sein (siehe Figuren 1, 2, 3, 6, 9, 14, 15, 19). In einer Ausführungsform können zwei erste Werkzeuge 31 und zwei zweite Werkzeuge 32 mit dem Verstellmechanismus 200 assoziiert sein (siehe Figur 11). In einer Ausführungsform können zwei erste Werkzeuge 31 und drei zweite Werkzeuge 32 mit dem Verstellmechanismus 200 assoziiert sein (siehe Figuren 12, 13, 18).

Zumindest ein erstes Werkzeug 31 kann an einem zugehörigen ersten Schlitten 70, 71 angeordnet sein. Zumindest ein zweites Werkzeug 32 kann an einem zugehörigen zweiten Schlitten 70, 72 angeordnet sein. Jedes erste Werkzeug 31 kann an einem jeweiligen zugehörigen ersten Schlitten 70, 71 angeordnet sein. Jedes zweite Werkzeug 32 kann an einem jeweiligen zugehörigen zweiten Schlitten 70, 72 angeordnet sein.

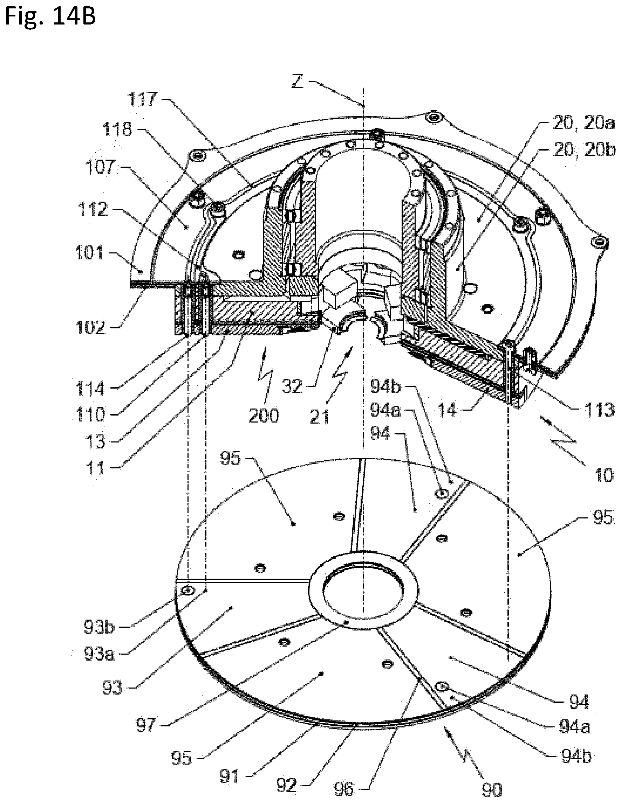

Die ersten Werkzeuge 31 können in eine gemeinsame erste Schnittebene (oder Bearbeitungsvolumen, falls die Werkzeuge in ihrer Bewegungsrichtung eine flächige Kontaktstelle zum Kabel haben) haben. Die erste Schnittebene kann sich senkrecht zur Rotationsachse Z erstrecken. Die zweiten Werkzeuge 32 können eine gemeinsame zweiten Schnittebene haben. Die zweite Schnittebene kann sich senkrecht zur Rotationsachse Z erstrecken. Die ersten Werkzeuge 31 können so ausgebildet und angeordnet sein, dass sie in einer gemeinsamen ersten Schnittebene schneiden können. Die zweiten Werkzeuge 32 können so ausgebildet und angeordnet sein, dass sie in einer gemeinsamen zweiten Schnittebene schneiden können. In einer Ausführungsform können die erste Schnittebene und die zweite Schnittebene zusammenfallen (siehe beispielsweise Figur 14). In einer Ausführungsform können die erste Schnittebene und die zweite Schnittebene parallel zueinander verlaufen (siehe beispielsweise Figur 12). In einer Ausführungsform können die erste Schnittebene und die zweite Schnittebene beabstandet zueinander parallel verlaufen (siehe beispielsweise Figur 12).

Die Werkzeuge 31, 32 können radial bewegbar angeordnet sein. Die Werkzeuge 31, 32 können in Relation zur Rotationsachse Z bewegbar sein. Die ersten Werkzeuge 31 können entlang von Linearführungen 17 bewegbar sein. Die zweiten Werkzeuge 32 können entlang von Linearführungen 17 bewegbar sein. Die Linearführungen 17 können in Richtung der Rotationsachse Z ausgerichtet sein (siehe z. B. Figs 1, 2, 3).

Zumindest ein Schlitten 70, 71, 72 kann in einer zugehörigen Schlittenführung bewegbar angeordnet sein. Zumindest ein Schlitten 70, 71, 72 kann in einer zugehörigen Schlittenführung radial bewegbar angeordnet sein. Zumindest ein Schlitten 70, 71, 72 kann in der zugehörigen Schlittenführung in Relation zur Rotationsachse Z bewegbar sein. Jeder Schlitten 70, 71, 72 kann in einer jeweiligen zugehörigen Schlittenführung bewegbar angeordnet sein. Jeder Schlitten 70, 71, 72 kann in der jeweiligen Schlittenführung radial bewegbar sein. Jeder Schlitten 70, 71, 72 kann in der jeweiligen Schlittenführung in Relation zur Rotationsachse Z bewegbar sein. Die Schlittenführung kann eine Linearführung 17 sein. Die Linearführung 17 kann durch eine Schlittenführung ausgebildet sein.

Der erste Schlitten 70, 71 kann über ein erstes Schlitten-Pleuel-Gelenk 65, 66 mit dem jeweiligen zugehörigen ersten Pleuel 60, 61 gelenkig verbunden sein. Der zweite Schlitten 70, 72 kann über ein zweites Schlitten-Pleuel-Gelenk 65, 67 mit dem jeweiligen zugehörigen zweiten Pleuel 60, 62 gelenkig verbunden sein.

Jeder Pleuel 60, 61, 62 kann an dem Stellmittel 50 angeordnet sein. Jeder Pleuel 60, 61, 62 kann an dem Stellmittel 50 gelenkig befestigt sein. Der Pleuel 60, 61, 62 kann über ein Stellmittel-Pleuel-Gelenk 55, 56, 57 mit dem Stellmittel 50 verbunden sein.

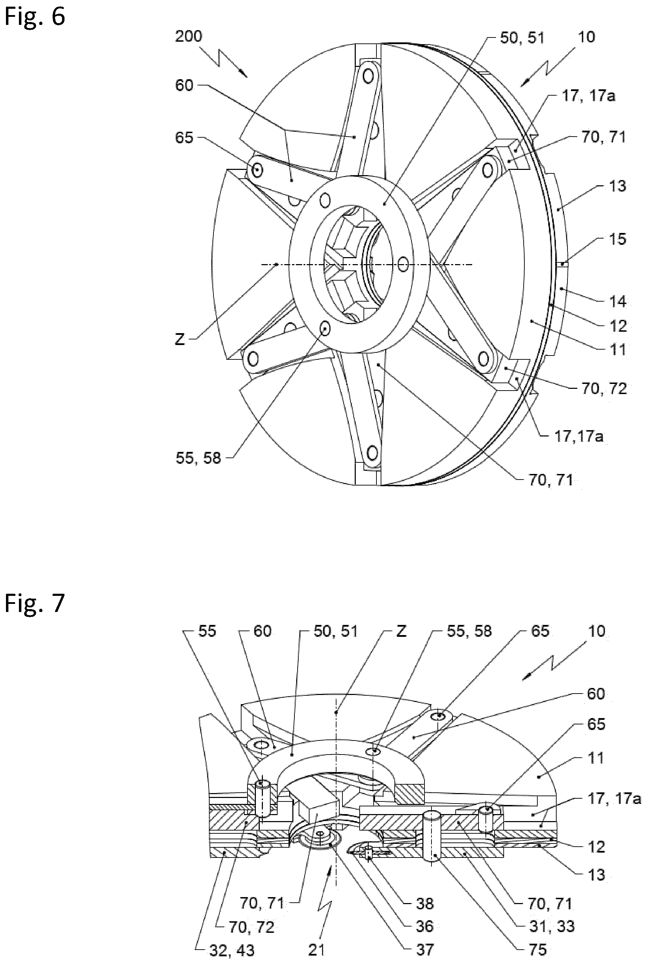

In einer Ausführungsform kann jeder Pleuel 60, 61, 62 separat an dem Stellmittel 50 angeordnet sein (siehe insbesondere Figuren, 1, 3, 9, 10, 11, 15, 19). Jeder Pleuel 60, 61, 62 kann an einer jeweiligen Festlegstelle an dem Stellmittel 50 festgelegt sein. In einer Ausführungsform können ein erster Pleuel 60, 61 und ein zweiter Pleuel 60, 62 ein Pleuelpaar bilden. Das Pleuelpaar kann an einer Paarfestlegstelle 58 an dem Stellmittel 50 angeordnet sein (siehe insbesondere Figuren 6). In einer Ausführungsform können ein erster Pleuel 60, 61 und ein zweiter Pleuel 60, 62 ein Pleuelpaar ausbilden und an einer Paarfestlegstelle 58 an dem Stellmittel 50 angeordnet sein und zumindest ein weiterer erster Pleuel 60, 61 und/oder zumindest ein weiterer zweiter Pleuel 60, 62 an einer jeweiligen separaten Festlegstelle an dem Stellmittel festgelegt sein (siehe insbesondere Figuren 13, 18, 21). Der Verstellmechanismus kann sowohl zumindest einen separaten Einzelpleuel als auch zumindest ein Pleuelpaar aufweisen.

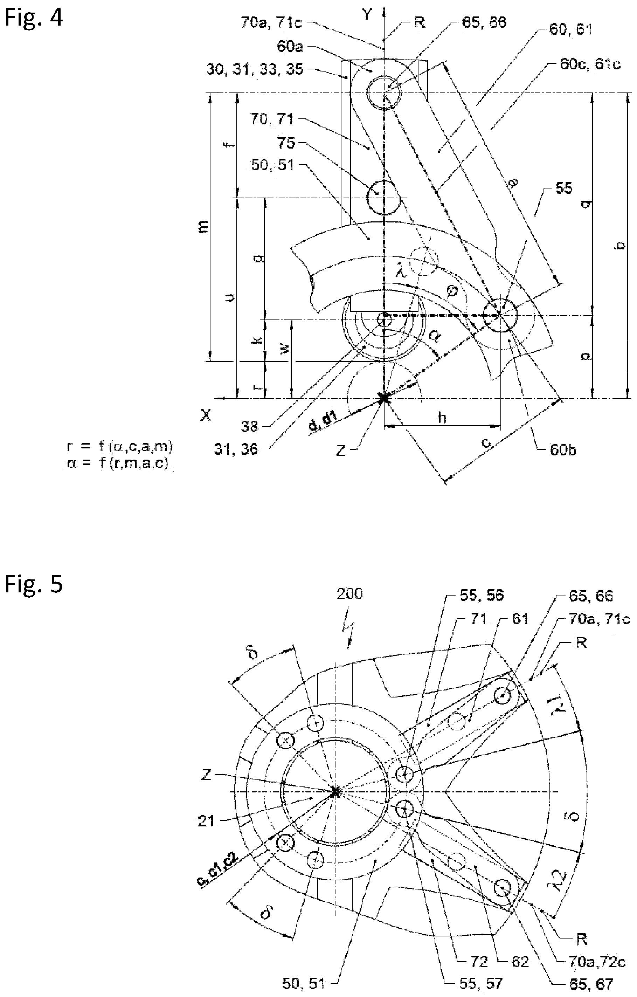

Die Festlegstellen der ersten Pleuel 61 können am Stellmittel 50 bezüglich seiner Drehachse gleichwinklig verteilt angeordnet sein. Die Festlegstellen der zweiten Pleuel 62 können am Stellmittel 50 bezüglich seiner Drehachse gleichwinklig verteilt angeordnet sein. Bezüglich der Drehachse des Stellmittels können die Festlegstellen der ersten Pleuel 61 zu den Festlegstellen der zweiten Pleuel 62 einen Winkelversatz δ haben. Eine Gerade, die durch die Rotationsachse Z und die Festlegstelle des ersten Pleuels 61 verläuft, und eine weitere Gerade, die durch die Rotationsachse Z und die Festlegstelle des zweiten Pleuels 62 verläuft, können den Winkel δ einschließen (siehe insbesondere Figur 5). In einer Ausführungsform kann zwischen zwei aufeinanderfolgenden (in Umlaufrichtung aufeinanderfolgenden) Festlegstellen der ersten Pleuel 61 eine Festlegstelle eines zweiten Pleuels 62 angeordnet sein.

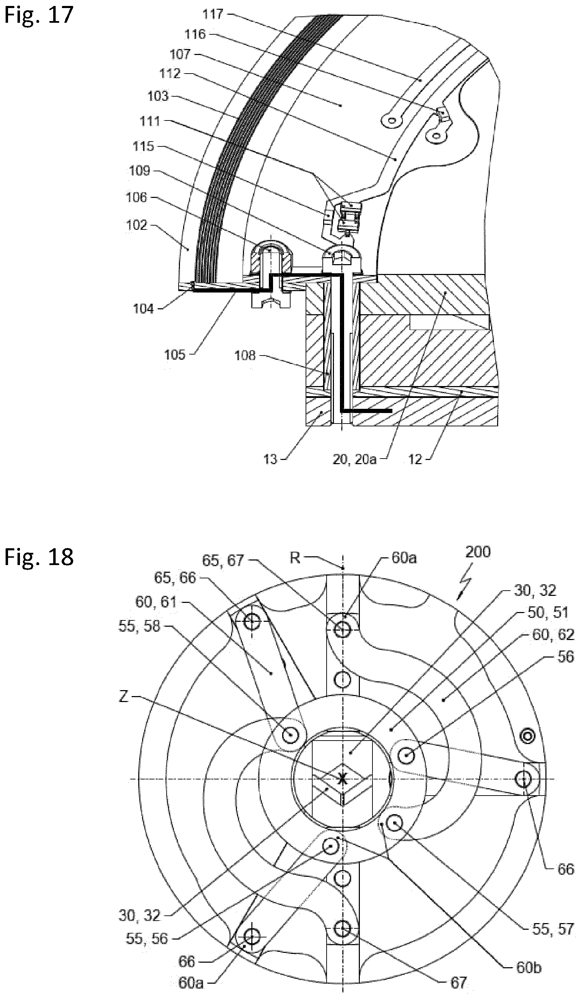

Jeder erste Pleuel 61 der Vielzahl erster Pleuel 61 kann identisch ausgebildet sein. Jeder zweite Pleuel 62 der Vielzahl zweiter Pleuel 62 kann identisch ausgebildet sein. In einer Ausführungsform können alle ersten Pleuel 61 und alle zweiten Pleuel 62 identisch ausgebildet sein. In einer Ausführungsform können alle ersten Pleuel 61 identisch ausgebildet sein und alle zweiten Pleuel 62 identisch, aber verschieden zu den ersten Pleueln 61 identisch ausgebildet sein (siehe insbesondere Figur 18). In einer Ausführungsform können alle ersten Pleuel 61 identisch ausgebildet sein und alle zweiten Pleuel 62 identisch und identisch zu den ersten Pleueln 61 ausgebildet sein. In einer Ausführungsform können alle Pleuel 60, 61, 62 identisch ausgebildet sein (siehe beispielsweise Figur 1, 3, 6, 9).

Ein Pleuel 60, 61, 62 kann als Flachprofil ausgebildet sein. Der Pleuel 60, 61, 62 (erster Pleuel 61, zweiter Pleuel 62) kann ein Kopfende 60a aufweisen. Der Pleuel 60, 61, 62 kann ein Fußende 60b aufweisen. Der Pleuel 60, 61, 62 kann sich entlang einer Pleuel-Längsrichtung erstrecken, insbesondere vom Fußende 60b zum Kopfende 60a des Pleuels 60, 61, 62. Der Pleuel 60, 61, 62 kann eine zugehörige Pleuel-Wirklinie 60c, 61c, 62c aufweisen. Die zugehörige Pleuel-Wirklinie 60c, 61c, 62c kann zwischen dem Fußende 60b und dem Kopfende 60a des Pleuels 60, 61, 62 verlaufen. Die Pleuel-Wirklinie 60c, 61c, 62c kann entlang der Pleuel-Längsrichtung des jeweiligen Pleuels 60, 61, 62 verlaufen.

Der Pleuel 60, 61, 62 kann über das Stellmittel-Pleuel-Gelenk 55, 56, 57 am Stellmittel 50 gelenkig festlegbar sein. Der Pleuel 60, 61, 62 kann über das Schlitten-Pleuel-Gelenk 65, 66, 67 am Schlitten 70, 71, 72 gelenkig festlegbar sein. Die zugehörige Pleuel-Wirklinie 60c, 61c, 62c des Pleuels 60, 61, 62 kann zwischen dem Stellmittel-Pleuel-Gelenk 55, 56, 57 und dem Schlitten-Pleuel-Gelenk 65, 66, 67des Pleuels 60, 61, 62 verlaufen. Das Stellmittel-Pleuel-Gelenk 55, 56, 57 kann einen Stellringstift aufweisen. Das Schlitten-Pleuel-Gelenk 65, 66, 67 kann einen Schlitten-Pleuel-Stift aufweisen.

Das Stellmittel-Pleuel-Gelenk 55, 56, 57 kann am Fußende 60b des jeweiligen Pleuels 60, 61, 62 angeordnet sein. Das Schlitten-Pleuel-Gelenk 65, 66, 67 kann am Kopfende 60a des jeweiligen Pleuels 60, 61, 62 angeordnet sein. Entlang der Pleuel-Wirklinie 60c, 61c, 62c können das Stellmittel-Pleuel-Gelenk 55, 56, 57 und das Schlitten-Pleuel-Gelenk 65, 66, 67 des jeweiligen Pleuels 60, 61, 62 einander gegenüberliegend angeordnet sein. Der jeweilige Pleuel 60, 61, 62 kann sich zwischen dem Stellmittel-Pleuel-Gelenk 55, 56, 57 und dem Schlitten-Pleuel-Gelenk 65, 66, 67 erstrecken.

Der Pleuel 60, 61, 62 kann eine jeweilige Pleuellänge a, a1, a2 aufweisen. Die Pleuellänge a kann der Abstand zwischen dem Stellmittel-Pleuel-Gelenk 55, 56, 57 und dem Schlitten-Pleuel-Gelenk 65, 66, 67 des Pleuels 60, 61, 62 sein. In einer Ausführungsform kann jeder erste Pleuel 61 dieselbe Pleuellänge a1 aufweisen. In einer Ausführungsform kann jeder zweite Pleuel 62 dieselbe Pleuellänge a2 aufweisen. In einer Ausführungsform können jeder erste Pleuel 61 und jeder zweite Pleuel 62 dieselbe Pleuellänge a, a1, a2 aufweisen (siehe beispielsweise Figur 1). In einer Ausführungsform können sich die Pleuellängen a1 der ersten Pleuel 61 von den Pleuellängen a2 der zweiten Pleuel 62 unterscheiden (siehe insbesondere Figur 18).

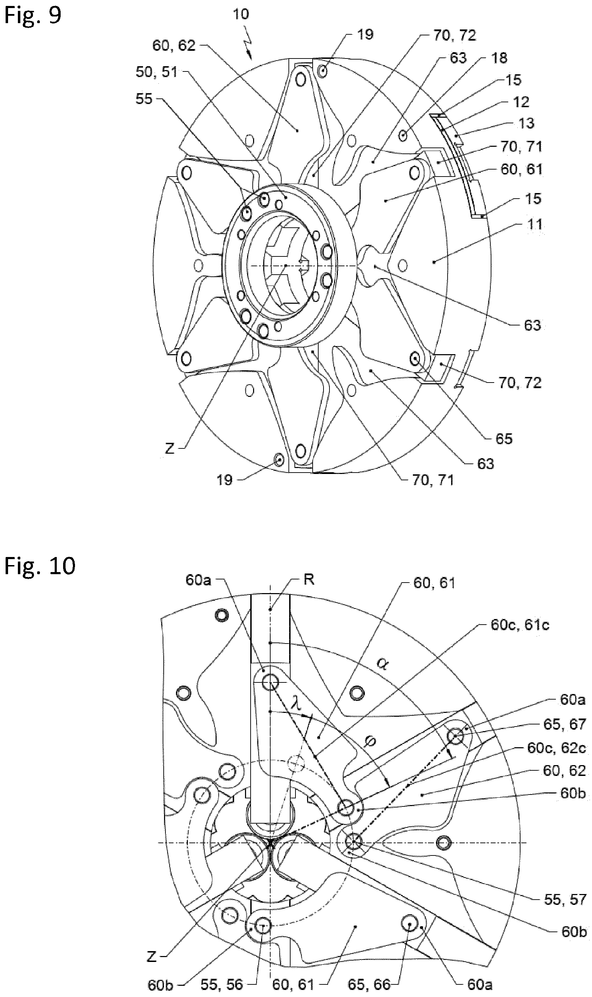

In einer Ausführungsform können die Pleuel 60, 61, 62 symmetrisch in Bezug zu ihrer jeweiligen Pleuel-Wirklinie 60c, 61c, 62c ausgebildet sein (siehe beispielweise Figur 1, 4). In einer Ausführungsform können die Pleuel 60, 61, 62 asymmetrisch mit Bezug zu ihrer jeweiligen Pleuel-Wirklinie 60c, 61c, 62c ausgebildet sein (siehe beispielweise Figur 9, 10).

Die ersten Pleuel 61 können einen zentralen Bereich aufweisen, der zwischen dem Fußende 60b und dem Kopfende 60a angeordnet ist. In einer Ausführungsform können sich die ersten Pleuel 61 vom jeweiligen zentralen Bereich in Richtung des jeweiligen Fußendes 60b verjüngen. In einer Ausführungsform können sich die ersten Pleuel 61 vom jeweiligen zentralen Bereich in Richtung des jeweiligen Kopfendes 60a verjüngen. In einer Ausführungsform können sich die ersten Pleuel 61 vom jeweiligen zentralen Bereich in Richtung des jeweiligen Fußendes 60b und in Richtung des jeweiligen Kopfendes 60a verjüngen. In einer Ausführungsform können sich die ersten Pleuel 61 vom jeweiligen zentralen Bereich in Richtung des jeweiligen Fußendes 60b und in Richtung des jeweiligen Kopfendes 60a ungleichmäßig verjüngen.

Die zweiten Pleuel 62 können einen zentralen Bereich aufweisen, der zwischen dem Fußende 60b und dem Kopfende 60a angeordnet ist. In einer Ausführungsform können sich die zweiten Pleuel 62 vom jeweiligen zentralen Bereich in Richtung des jeweiligen Fußendes 60b verjüngen. In einer Ausführungsform können sich die zweiten Pleuel 62 vom jeweiligen zentralen Bereich in Richtung des jeweiligen Kopfendes 60a verjüngen. In einer Ausführungsform können sich die zweiten Pleuel 62 vom jeweiligen zentralen Bereich in Richtung des jeweiligen Fußendes 60b und in Richtung des jeweiligen Kopfendes 60a verjüngen. In einer Ausführungsform können sich die zweiten Pleuel 62 vom jeweiligen zentralen Bereich in Richtung des jeweiligen Fußendes 60b und in Richtung des jeweiligen Kopfendes 60a ungleichmäßig verjüngen.

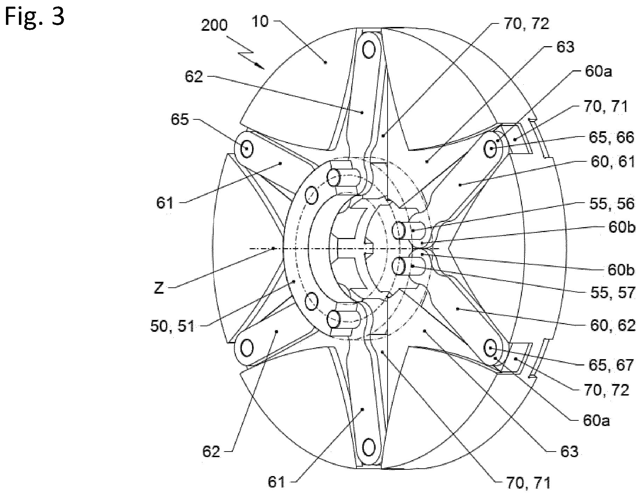

Die ersten Pleuel 61 können in einer ersten Pleuelebene angeordnet sein. Die ersten Pleuel 61 können in der ersten Pleuelebene bewegbar sein. Die erste Pleuelebene kann sich senkrecht zur Rotationsachse Z erstrecken. Die zweiten Pleuel 62 können in einer zweiten Pleuelebene angeordnet sein. Die zweiten Pleuel 61 können in der zweiten Pleuelebene bewegbar sein. Die zweite Pleuelebene kann sich senkrecht zur Rotationsachse Z erstrecken. Die erste Pleuelebene und die zweite Pleuelebene können zusammenfallen (siehe beispielsweise Figur 3). Die erste Pleuelebene und die zweite Pleuelebene können sich parallel zueinander erstrecken (siehe beispielsweise Figur 7).

Die erste Pleuelebene kann sich parallel zur ersten Schnittebene der ersten Werkzeuge 31 erstrecken. Die zweite Pleuelebene kann sich parallel zur zweitem Schnittebene der zweiten Werkzeuge 32 erstrecken.

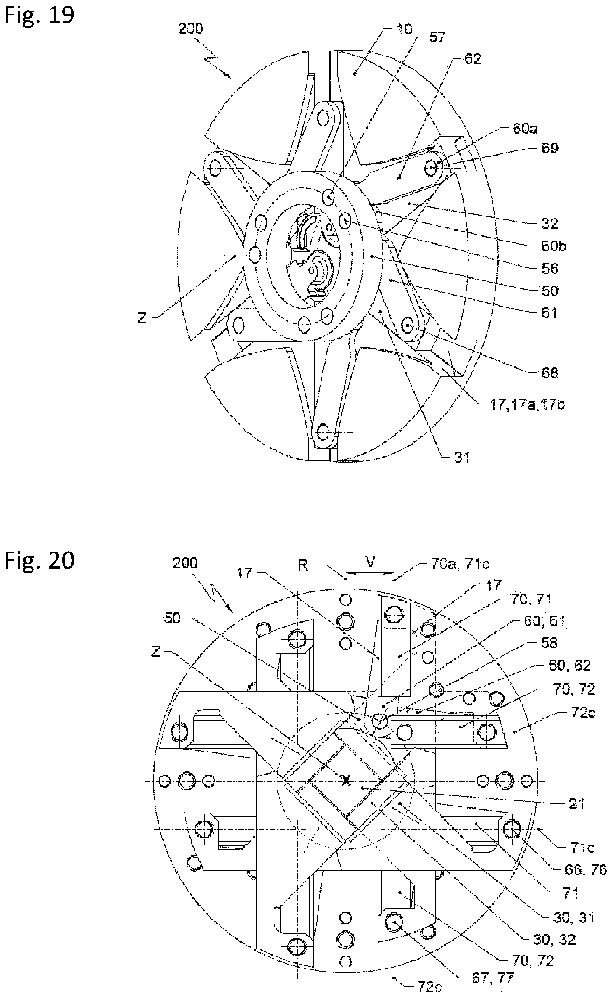

Figur 19 zeigt eine Ausführungsvariante eines Verstellmechanismus 200 von hinten. Er kann an der Rotorbasis angebracht sein. Vorzugsweise wird der Werkzeugflansch an der Rotorbasis 20 aufgeschraubt (koaxial aufgeflanscht). Der Werkzeugflansch kann mit der Rotorbasis auch eine Einheit bilden. Der Bearbeitungskopf, insbesondere der Verstellmechanismus 200, kann einen einteiligen Werkzeugflansch 10 aufweisen. In den einteiligen Werkzeugflansch 10 können die Linearführungen 17 als einfache Nuten eingefräst sein, in welchen die Schlitten 70 gleiten können. Jedes Werkzeug 30, 31, 32 kann mit seinem jeweiligen zugehörigen Schlitten 70, 71, 72 eine jeweilige Einheit bilden. Die Nuten können zugleich als Schlittenführungen 17a und Werkzeugführungen 17b dienen. Für die Bewegungsfreiheit und Führung der jeweiligen Pleuel 60, 61, 62 über den ganzen Verstellbereich des Stellringes 50 können im Werkzeugflansch 10 Pleueltaschen 63 ausgefräst sein. Der Werkzeugflansch 10 kann rotationssymmetrisch in 6x60° aufgeteilt sein, sodass auch die Nuten 17 und Pleueltaschen 63 für die ersten Werkzeuge 31 und zweiten Werkzeuge 32 identisch und rotationssymmetrisch sind.

Figuren 1, 2 und 3 zeigen Ausschnitte eines Bearbeitungskopfes mit einem Verstellmechanismus 200 mit angeordneten Werkzeugen 30, bei dem die Zugänglichkeit und Austauschbarkeit der Werkzeuge 30, 31, 32 einfacher sein kann. Dazu können die Linearführungen 17 funktionell in Schlittenführungen 17a und Werkzeugführungen 17b aufgeteilt sein (siehe insbesondere Figuren 2 und 3). Zur Bewegungsübergabe der Schlitten 70 zu den jeweiligen zugehörigen Werkzeugen 30 können vorzugsweise Schlitten-Werkzeug-Gelenke 75, 76, 77 verwendet werden, welche vorzugsweise translatorisch nur für die Wirkrichtung der jeweiligen Werkzeugführungen 17b eine formschlüssige Verbindung ergeben. Dies kann ein Verklemmen einer Linearbewegung verhindern, falls eine Werkzeugführung 17b nicht exakt fluchtend zur korrespondierenden Schlittenführung 17a ausgeführt ist. Die Verbindung der Schlitten 70 zu den Werkzeugen 30 kann einfach mit einem Schlitten-Werkzeug-Stift 75, durch ein Langloch 25 im Werkzeugflansch 10 ausgeführt sein. Der Schlitten-Werkzeug-Stift 75 kann im Schlitten 70 fest eingepresst sein und werkzeugseitig zwei translatorische Freiheitsgrade haben, indem der Schlitten-Werkzeug-Stift 75 nur über ein Langloch im Werkzeug mit diesem verbunden ist.

Figuren 6, 7, 9, 12 und 14 zeigen Ausschnitte von Ausführungsbeispielen von Bearbeitungsköpfen mit Verstellmechanismen 200 mit angeordnetes Werkzeugen 30, bei denen ein oder mehrere Werkzeuge 30 für einen Betrieb mit einer Einrichtung zur Werkzeug-Leiter-Berührungsdetektion vorgesehen sein kann/können. Dazu kann der Werkzeugflansch 10 aus einem Schlittenflansch 11 und zumindest einem ersten Werkzeugsegment 13 bestehen, das elektrisch isoliert über Isolationen 12, 15 am Schlittenflansch 11 angebracht sein kann.

Figur 14A zeigt ein Ausführungsbeispiel von einem rotativen Bearbeitungskopf 300 mit einem Verstellmechanismus 200, der nebst einem zum Schlittenflansch 11 (siehe Figs 14A und B) elektrisch isolierten ersten Werkzeugsegment 13 zwei weitere zum Schlittenflansch 11 elektrisch isolierte zweite Werkzeugsegmente 14 aufweist.

In den Figuren 4, 5 und 10 sind Ausschnitte der Bearbeitungsköpfe der Figuren 1 bzw. 9 gezeigt. Insbesondere sind in den Figuren 4, 5 und 10 Maße und/oder geometrische Zusammenhänge insbesondere hinsichtlich der Verstellmechanismen 300 illustriert.

Die Pleuellänge a kann sich zwischen dem Schlitten-Pleuel-Gelenk 65 und dem Stellmittel-Pleuel-Gelenk 55 erstrecken. Ein Abstand zwischen der Rotationsachse Z und dem Schlitten-Pleuel-Gelenk 65 kann ein Teilkreis-Radius c des Stellmittel-Pleuel-Gelenkes sein. Das Werkzeug 31 kann als scharfes Abrollmesser 33 mit einer scharfen Abrollmesserscheibe 36 oder als stumpfes Abrollmesser 34 mit einer stumpfen Abrollmesserscheibe 37 ausgeführt sein. Wobei vorzugsweise das eine scharfes Abrollmesser, wie schon beschrieben, als Abtast-Abrollmesser 33 dienen kann und vorzugsweise im ersten Werkzeugsegment 13, welches elektrisch mit einer Einrichtung für eine Werkzeug-Leiter-Berührungsdetektion verbunden sein kann, montiert werden kann, sodass ein Kabel 80 bis zur detektierbaren Schicht geregelt eingeschnitten werden kann. Das Werkzeug 31 kann zu einem Bearbeitungsdurchmesser d1 in Richtung der Rotationsachse Z bewegbar sein.

Der Schlitten 70 kann über einen Schlitten-Pleuel-Stift 65 mit dem Pleuel 60 verbunden sein. Der Schlitten 70 kann über einen Schlitten-Werkzeug-Stift 75 mit dem Werkzeug 30 verbunden sein. Der Schlitten-Pleuel-Stift 65 und der Schlitten-Werkzeug-Stift 75 können entlang der Längsachse des Schlittens 70 (und/oder entlang der Schlitten-Wirklinie 71c, 72c) voneinander mit einem Abstand f beabstandet sein. Das Schlitten-Pleuel-Gelenk 65 kann mit einem Abstand b von der Rotationsachse Z beabstandet sein. Das Schlitten-Werkzeug-Gelenk 75 kann mit einem Abstand u von der Rotationsachse Z beabstandet sein.

Ein Stell-Gesamt-Winkel α kann von einer Geraden, die durch die Rotationsachse Z und entlang der Schlittenlängsachse (und/oder entlang der Schlitten-Wirklinie) verläuft (beispielsweise durch das Schlitten-Pleuel-Gelenk 65 und/oder das Schlitten-Werkzeug-Gelenk 75) und einer Geraden, die durch die Rotationsachse Z und das Stellmittel-Pleuel-Gelenk 55 verläuft, eingeschlossen sein.

Ein Stell-Start-Winkel λ kann von einer Geraden, die durch die Rotationsachse Z und entlang der Schlittenlängsachse (und/oder entlang der Schlitten-Wirklinie 71c, 72c) verläuft (beispielsweise durch das Schlitten-Pleuel-Gelenk 65 und/oder das Schlitten-Werkzeug-Gelenk 75) und einer Geraden, die durch die Rotationsachse Z und das Stellmittel-Pleuel-Gelenk 55 verläuft, wenn sich die Pleuel 30 in einer Neutralstellung befinden, eingeschlossen sein. Der Stell-Start-Winkel λ kann einen Winkel des Stellring-Stiftes aus dem Totpunkt beschreiben. Der Stell-Start-Winkel λ kann in der Neutralstellung einen Winkel des Stellmittel-Pleuel-Gelenkes aus dem Totpunkt beschreiben.

Das Stellmittel 50 kann um einen Verstellwinkel φ um die Rotationsache Z gedreht werden. Aus der Neutralstellung (φ = 0°) kann das Stellmittel 50 um die Rotationsache Z um den Verstellwinkel φ gedreht werden.

In den Figuren 4, 5 und 9 können beispielhaft geometrische Zusammenhänge gezeigt sein, die ein Herleiten des Bearbeitungsradius r in Abhängigkeit des Stell-Gesamt-Winkels α (α = λ+φ) , beispielsweise mit den Parametern c, a und m herzuleiten (r = f(α,c,a,m)) und/oder die entsprechende Umkehrfunktion herzuleiten (α = f(r,m,a,c)). Insbesondere für die Steuerung können aus der Umkehrfunktion wichtige Informationen abgeleitet werden. Die Funktion des Bearbeitungsradius ist beispielhaft in der Figur 8A für das Ausführungsbeispiel gemäß der Figuren 1 bis 3 dargestellt, jedoch als Bearbeitungsdurchmesser d1 und d2 in Funktion des Verstellwinkels φ (φ = α-λ). Ebenso sind die Bearbeitungsdurchmesser in der Figur 8B für das Ausführungsbeispiele gemäß der Figur 6 dargestellt.

In einer Ausführungsform kann sich die Geometrie des ersten Kurbeltriebes von der Geometrie des zweiten Kurbeltriebes unterscheiden. Beispielsweise können die erste Pleuellänge a1 und die zweite Pleuellänge a2 unterschiedlich sein. Beispielsweise können der erste Teilkreisradius c1 und der zweite Teilkreisradius c2 unterschiedlich sein.

In dem gezeigten Beispiel in den Figuren 1 bis 3 werden beispielhaft für die ersten Werkzeuge 31 Abrollmesser und für die zweiten Werkzeuge 32 Abzugs- und Aufweitwerkzeuge gezeigt. In den Figuren 1 und 2 sind beispielhaft die zweiten Werkzeuge 32 in einer Arbeitsposition (zugestellt) gezeigt, bereit zum Abziehen des zuvor eingeschnittenen Kabelmantels 83, und die ersten Werkzeuge 31sind in einer Ruheposition (zurückgestellt) gezeigt. In der Figur 3 ist die illustrierte Ausführungsform des Bearbeitungskopfes 300 beispielhaft mit einer Symmetriestellung des Stellmittels 50 dargestellt. In der illustrieren Symmetriestellung, können bei der dargestellten spiegel- und rotationssymmetrischen Ausführungsform die ersten Schlitten 71 den gleichen radialen Abstand zur Rotationsachse Z haben wie die zweiten Schlitten 72.

In der illustrierten beispielhaften Ausführungsform der Figuren 1 bis 3, können die Arbeitsebenen (Schnittebenen) der ersten Werkzeuge 31 und der zweiten Werkzeuge 32 zusammenfallen. Die Arbeitsebenen (Schnittebenen) der ersten Werkzeuge 31 und der zweiten Werkzeuge 32 können sich senkrecht zur Rotationsachse Z erstrecken.

Die Schlitten 70, 71, 72 und die jeweiligen zugehörigen Werkzeuge 30, 31, 32 können getrennt voneinander ausgebildet sein. Die jeweiligen zugehörigen Werkzeuge 30, 31, 32 können an den jeweiligen zugehörigen Schlitten 70, 71, 72 festgelegt sein.

Der Stellring 50 kann, wie in der Figur 4 gezeigt, vom Stell-Start-Winkel λ aus um den VerstellWinkel φ nach rechts gedreht sein, sodass sich für die ersten Werkzeuge 31 einen Bearbeitungsdurchmesser d, d1 ergibt. Damit könnte beispielsweise das Kabel 80 rollend bis zum Kabelschirm 85 eingeschnitten werden, sodass der abgetrennte Kabelmantel 83 mit den zweiten Werkzeugen 32 abgezogen werden könnte, ohne dass das Kabel 80 dafür anders platziert werden müsste und ohne dass dazu eine weitere Bearbeitungsstation nötig ist. Ein Vorteil könnte sein, dass weniger Bearbeitungsstationen benötigt würden. Kosten, Platzbedarf, Produktionszeit und Verfahrwege könnten reduziert werden.

Der Stell-Start-Winkel λ1 und λ2 = λ (siehe auch Figur 5) kann bei einem spiegel- und rotationssymmetrischen Aufbau des Verstellmechanismus 200 durch den Winkel δ zwischen dem ersten Stellmittel-Pleuel-Gelenk 56 (erste Stellringstifte) und dem zweiten Stellmittel-Pleuel-Gelenk 57 (zweite Stellringstifte) gegeben sein. Von der Symmetrie kann abgewichen werden.

In der Figur 5 ist ein Ausschnitt des beispielhaften Verstellmechanismus 200 eines Bearbeitungskopfes 300 in der Symmeriestellung gezeigt. In einer weiteren Ausführungsform kann der Teilkreisradius c1 der ersten Stellmittel-Pleuel-Gelenk 56 von dem Teilkreisradius c2 der zweiten Stellmittel-Pleuel-Gelenk 57 unterschiedlich gewählt sein.

In einer weiteren Ausführungsform können die ersten Pleuel 61 und die zweiten Pleuel 62 mit demselben Stellringstift 55 betätigt werden (siehe auch Figuren 6, 7). Der Winkel δ zwischen dem ersten Stellmittel-Pleuel-Gelenk 56 und dem zweiten Stellmittel-Pleuel-Gelenk 57 könnte sein δ = 0°. In einer Ausführungsform könnte mit einem symmetrischen Aufbau mit sechs Werkzeugen 31, insbesondere drei ersten Werkzeugen 31 und drei zweiten Werkzeugen 32, der Stell-Start-Winkel λ = 30° betragen. Das Verhalten des Öffnungsdurchmesser d als Funktion des Verstellwinkels φ kann stark durch die Wahl der Stell-Start-Winkels λ beeinflusst werden. Dies ist beispielsweise anhand der Figuren 8A (λ = 16°) und 8B (λ = 30°) illustriert.

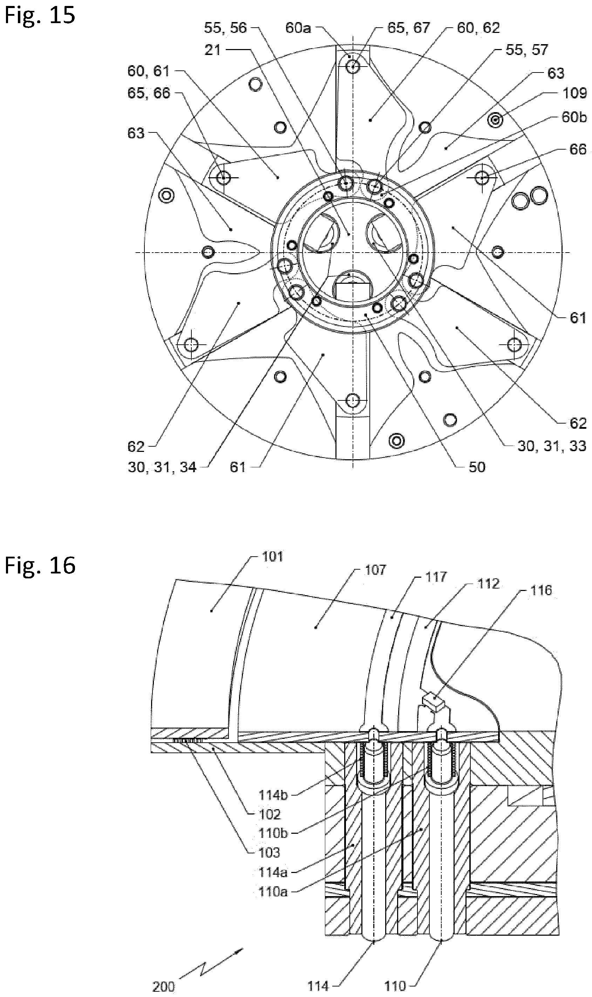

In der Figur 15 ist ein beispielhafter Verstellmechanismus 200 einer Ausführungsform eines Bearbeitungskopfes 300 mit einem assoziierten ersten Werkzeugset (erste Werkzeuge 31) und einem assoziierten zweiten Werkzeugset (zweite Werkzeuge 32) illustriert. In der Figur ist eine beispielhafte Position des Stellmittels 50 gezeigt, bei der das Stellmittel 50 um einen Verdrehwinkel (Verstellwinkel φ) des Stellmittels gedreht ist, sodass die ersten Werkzeuge 31 halb zugestellt und die zweiten Werkzeuge 32 zurückgezogen sind.

Die Figuren 8A und 8B zeigen beispielhafte Verstellwinkel-Öffnungsdurchmesser-Diagramme für unterschiedliche Ausführungsformen des Bearbeitungskopfes 300, insbesondere der Ausführungsform der Figuren 1 bis 3 (Figur 8A) und der Ausführungsform der Figuren 6 und 7 (Figur 8B). In den Figuren 8A und 8B ist der Öffnungsdurchmesser d1 der ersten Werkzeuge 31 und der Öffnungsdurchmesser d2 der zweiten Werkzeuge 32 gegen den Verstellwinkel φ abgetragen. In der Neutralstellung (φ = 0°) können der Öffnungsdurchmesser d1 der ersten Werkzeuge 31 und der Öffnungsdurchmesser d2 der zweiten Werkzeuge 32 identisch sein. Die ersten Werkzeuge 31 und die zweiten Werkzeuge 32 können in der Neutralstellung (φ = 0°) denselben Abstand zur Rotationsachse Z aufweisen. Durch eine Drehung des Stellmittels 50 können die Werkzeuge 30, 31, 32 aus der Neutralstellung ausgelenkt werden. Bei einer positiven Drehung innerhalb eines ersten Verstellbereiches (Winkelbereich), beispielsweise von φ = 0° zu φ = 10°, kann der Öffnungsdurchmesser d1 der ersten Werkzeuge 31 reduziert werden. Gleichzeitig kann der Öffnungsdurchmesser d2 der zweiten Werkzeuge 32 vergrößert werden. Die ersten Werkzeuge 31 und die zweiten Werkzeuge 32 können sich gleichzeitig, jedoch gegenläufig bewegen. Während die ersten Werkzeuge 31 zugestellt werden können, können die zweiten Werkzeuge 32 weiter geöffnet werden.

Bei einer negativen Drehung innerhalb eines ersten Verstellbereiches (Winkelbereich), beispielsweise von φ = 0° zu φ = -10°, kann der Öffnungsdurchmesser d1 der ersten Werkzeuge 31 vergrößert werden. Gleichzeitig kann der Öffnungsdurchmesser d2 der zweiten Werkzeuge 32 reduziert werden. Die ersten Werkzeuge 31 und die zweiten Werkzeuge 32 können sich gleichzeitig, jedoch gegenläufig bewegen. Während die zweiten Werkzeuge 32 zugestellt werden können, können die ersten Werkzeuge 31 weiter geöffnet werden.

In den beispielhaften Verstellwinkel-Öffnungsdurchmesser-Diagrammen ist weiter illustriert, dass die gegenläufige Bewegung der ersten Werkzeuge 31 und der zweiten Werkzeuge 32 aus der Neutralstellung nur innerhalb eines ersten Verstellbereiches des Verstellwinkels φ erfolgen kann. Bei größeren Verstellwinkeln φ können die ersten Werkzeuge 31 und die zweiten Werkzeuge 32 gleichzeitig in dieselbe Richtung bewegbar sein. Beispielsweise können sich der Öffnungsdurchmesser d1 der ersten Werkzeuge 31 und der Öffnungsdurchmesser d2 der zweiten Werkzeuge 32 gleichzeitig verringern, wenn der Verstellwinkel φ in der Ausführungsform zur Figur 8A von φ = 25° auf φ = 35° erhöht würde.

Der erste Verstellbereich, d. h. der Winkelbereich, in dem der Verstellwinkel φ eine gleichzeitige gegenläufige Bewegung der Werkzeuge 30, 31, 32 ermöglichen kann, kann von der gewählten Geometrie des Verstellmechanismus 200 abhängen. Die Winkelbereiche außerhalb des ersten Verstellbereiches, in denen der Verstellwinkel φ eine gleichzeitige Bewegung der Werkzeuge 30, 31, 32 in dieselbe Richtung ermöglichen kann, können von der gewählten Geometrie des Verstellmechanismus 200 abhängen. Der Öffnungsdurchmesser d, d1, d2 der ersten und zweiten Werkzeuge 31, 32 in der Neutralstellung kann von der gewählten Geometrie des Verstellmechanismus 200 abhängen.

Figur 14B zeigt einen Schnitt durch die Figur 14A, wobei zur besseren Übersicht verschiedene Bauteile wie z. B. die Lagerung der Rotorbasis 20 und die Riemenräder 127, 128 weggelassen wurden. Figur 14B illustriert den mechanischen und elektrischen Zusammenhang einer möglichen Ausführungsform des rotativen Bearbeitungskopfes 300, die für einen Betrieb mit einer Werkzeug-Leiter-Berührungsdetektion vorgesehen ist.

Figur 17 zeigt ein Detail der Figur 14A als radialen Schnitt durch die erste Segment-Schraube 109. In der illustrierten Ausführungsform ist das erste Werkzeugsegment 13 elektrisch über den Verbindungsweg 105 (der über eine erste Segment-Schraube 109, eine HalbschalenLeiterplatte 107, eine erste Leiterplatten-Schraube 106 und ein Via 104 führt) mit dem einen Ende einer Rotorspule 103 einer Rotorspulenleiterplatte 102 verbunden. Das andere Ende der Rotorspule 103 ist elektrisch mit dem Rotorflansch 20a, der Rotorhohlwelle 20b und somit mit der gesamten Rotorbasis 20 verbunden (in diesem Schnitt der Fig. 17 nicht ersichtlich). Das erste Werkzeugsegment 13 bildet über die Isolationen 12 gegenüber der Rotorbasis 20 eine Kapazität, die zusammen mit den Induktivitäten der Rotor- und Statorspulen Hauptelemente eines LC-Schwingkreises bilden, der durch die Statorspule auf einer Statorspulenleiterplatte 101 (siehe auch Fig. 16) angeregt werden kann. Die Statorspulenleiterplatte 101 kann elektrisch mit einer Einrichtung für eine Werkzeug-Leiter-Berührungsdetektion verbunden sein.

Figur 16 zeigt einen Ausschnitt der Figur 14B. In den Figuren ist beispielhaft die Funktion eines ersten Federkontaktes 110 und eines zweiten Federkontaktes 114 gezeigt, die zusammen mit einer Einrichtung zur Messer-Leiter-Berührungsdetektion verwendet werden können.

Wenn die Deckscheibe 90, wie in der Figur 14B beispielhaft dargestellt, so montiert wird, dass das erste Deckscheibensegment 93 das erste Werkzeugsegment 13 abdeckt, ist der erste Federkontakt 110 über die erste Kontaktstelle 93a mit dem ersten Deckscheibensegment 93 und somit mit dem ersten Werkzeugsegment 13 und mit dem LC-Schwingkreis elektrisch verbunden, wogegen der zweite Federkontakt 114 auf die erste Isolationsstelle 93b drückt und somit nicht mit dem ersten Deckscheibensegment 93, nicht mit dem ersten Werkzeugsegment 13 und nicht mit dem LC-Schwingkreis elektrisch verbunden ist. Der zweite Federkontakt 114 ist über eine zweite Leiterbahn 117 auf der Halbschalenleiterplatte 107 über zweite Segment-Schrauben 113 mit den zweiten Werkzeugsegmenten 14 verbunden. Der erste Federkontakt 110 ist auf der Halbschalenleiterplatte 107 elektrisch mit einem Kompensationskondensator 116 und über eine erste Leiterbahn 112 über eine Basis-Schraube 118 mit der Rotorbasis verbunden. Somit sind in einer ersten Position der Deckscheibe 90, wie in dem Ausführungsbeispiel der Figur 14B dargestellt, die zweiten Werkzeugsegmente 14 nicht elektrisch mit dem LC-Schwingkreis verbunden, der Kompensationskondensator 116 hingegen schon. Mit dem Kompensationskondensator 116 wird erreicht, dass die Resonanzfrequenz des Schwingkreises etwa gleichbleibt, unabhängig davon, wie viele Werkzeugsegmente elektrisch mitschwingen. Der Kompensationskondensator 116 kompensiert somit die fehlende Kapazität der elektrisch nicht mit dem LC-Schwingkreis verbundenen zweiten Werkzeugsegmente 14.

Wenn die Deckscheibe 90 so montiert wird, dass eines der zweiten Deckscheibensegmente 94 das erste Werkzeugsegment 13 abdeckt, drückt der erste Federkontakt 110 auf die zweite Isolierstelle 94a und ist somit nicht mit dem zweiten Deckscheibensegment 94, nicht mit dem ersten Werkzeugsegment 13, nicht mit dem Kompensationskondensator 116 und nicht mit dem LC-Schwingkreis elektrisch verbunden, wogegen der zweite Federkontakt 114 auf die zweite Kontaktstelle 94b drückt und somit mit dem zweiten Deckscheibensegment 94, mit dem ersten Werkzeugsegment 13 und über die zweite Leiterbahn 117 mit den zweiten Werkzeugsegmenten 14 und mit dem LC-Schwingkreis elektrisch verbunden ist. Somit sind in einer zweiten Position der Deckscheibe 90, die zweiten Werkzeugsegmente 14 elektrisch mit dem ersten Werkzeugsegment 13 und somit mit dem LC-Schwingkreis verbunden, der Kompensationskondensator 116 hingegen nicht.

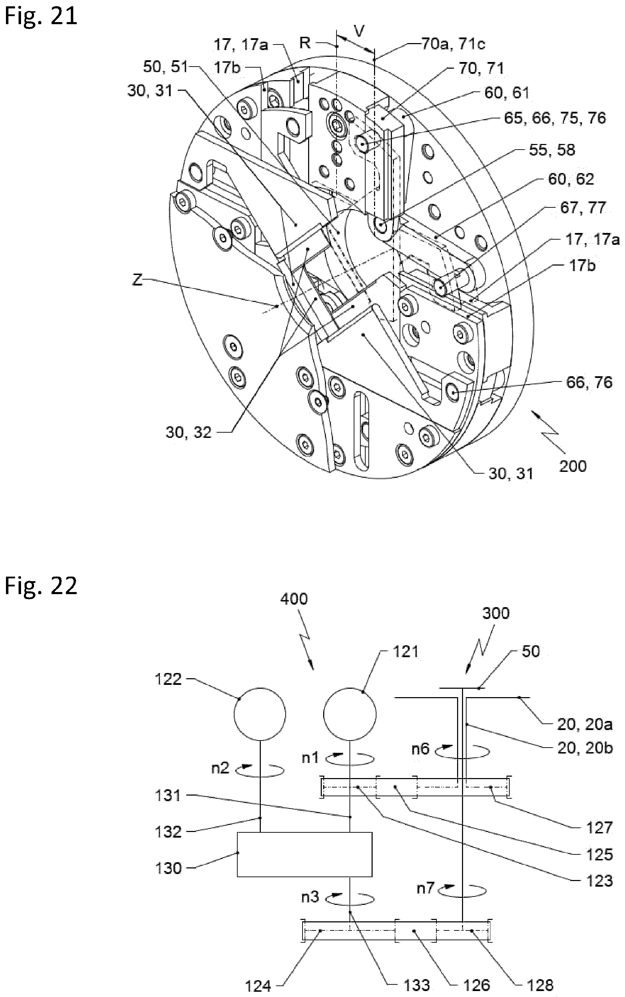

Figur 22 zeigt schematisch und beispielhaft eine Kabelbearbeitungsvorrichtung 400. In der Fig. 22 ist beispielhaft illustriert, wie die Rotorhohlwelle 20b, der Rotorflansch 20a und damit die gesamte Rotorbasis 20 mit der Drehzahl n6 und das Stellmittel 50 mit der Drehzahl n7 angetrieben werden können. In der gezeigten Ausführungsform treibt ein erster Motor 121 mit einer Drehzahl n1 über ein erstes Zahnriemenrad 123, einen ersten Zahnriemen 125 und über ein zweites Zahnriemenrad 127 die Rotorbasis 20 an. Der erste Motor 121 treibet auch eine erste Antriebswelle 131 des Drehzahl-Überlagerungsbetriebes 130 an. Die Abtriebswelle 133 des Drehzahl-Überlagerungsbetriebes 130 mit einer Drehzahl n3 treibt über ein drittes Zahnriemenrad 124, einen zweiten Zahnriemen 126 und über ein viertes Zahnriemenrad 128 das Stellmittel 50 an. Ein zweiter Motor 122 mit einer Drehzahl n2 treibt die zweite Antriebwelle 132 des Drehzahl-Überlagerungsgetriebes 130 an. Die Übersetzungsverhältnisse sind so gewählt, dass die Drehzahl n6 der Rotorbasis 20 gleich groß ist wie die Drehzahl n7 des Stellmittels 50, wenn der zweite Motor 122 stillsteht (n6 = n7 für n2 = 0). Durch Drehen des zweiten Motors 122 wird der Verstellwinkel φ zwischen Rotorbasis 20 und Stellmittel 50 eingestellt. Der zweite Motor 122 ist somit nur für die Verstellung der Werkzeuge zuständig und der erste Motor 121 ist nur für die synchrone Rotation der Rotorbasis 20 und des Stellmittels 50 zuständig.

In einer Ausführungsform kann der Bearbeitungskopf 300 einen Sensor oder mehrere gleich- oder verschiedenartige Sensoren aufweisen, der oder die so auf dem rotativen Bearbeitungskopf angebracht ist oder sind, dass er oder sie während dem Rotieren des Bearbeitungskopfes um das Kabel von diesem Daten in Funktion des Umdrehungswinkels des rotativen Bearbeitungskopfes aufnehmen kann oder können, sodass diese Daten in einer Steuerung gespeichert werden und für eine weitere Bearbeitung des Kabels genutzt werden können. Der Sensor kann ein kapazitiver Sensor oder ein kapazitives Sensorarray sein. Der Sensor kann ein induktiver Sensor sein. Der Sensor kann ein optischer Sensor sein. Der optische Sensor kann ein lineares oder flächiges Sensorarray aufweisen, zum Beispiel zur Vermessung eines Schattenwurfes des Kabels, wobei die Lichtquelle auf der gegenüberliegenden Seite des Sensors bezüglich der Rotationsachse liegt und vorzugsweise kollineares Licht zum gegenüberliegenden Sensor sendet, wobei die Frequenz der Lichtquelle entsprechend der optischen Permeabilität des Kabels angepasst sein kann, oder wobei die Lichtquelle verschiedene Frequenzen oder Spektren senden kann, auch außerhalb des sichtbaren Bereiches. Der Sensor kann eine Kamera aufweisen. Der Sensor kann zum Durchleuchten einer Kunststoffschicht ausgebildet sein, beispielsweise mithilfe einer kollinearen Infrarot-Lichtquelle und eines linearen oder flächigen Sensorarrays. Der Sensor kann zum Röntgen ausgebildet sein. Der Sensor kann zur Durchführung einer Computertomographie ausgebildet sein.

Beispielsweise in den Figuren 1, 2 und 3 ist eine Ausführungsform des Verstellmechanismus 200 gezeigt, in der die Linearführungen 17 radial in Bezug auf die Rotationsachse Z verlaufen. Die jeweiligen Wirkrichtungen (Wirklinien) 70a, 71c, 72c der Schlitten 71, 72 und Linearführungen 17 können in Radialrichtung R verlaufen. Die Schlitten 70 können sich in der Radialrichtung R (radial von der Rotationsachse Z weg und zu dieser hin) bewegen. Die Linearbewegungen der Werkzeuge 30, 31, 32 können radial in Bezug auf die Rotationsachse Z verlaufen. Die Wirkrichtungen können mit der Radialrichtung R zusammenfallen.

In den Figuren 20 und 21 ist eine Ausführungsform illustriert, in der die Wirkrichtungen (Wirklinien) 70a, 71c, 72c der Schlitten 70, 71, 72 und Linearführungen 17 mit einem Parallelversatz V bezüglich der radialen Richtung R verlaufen. In dem gezeigten Beispiel verlaufen die Linearführungen 17 der Schlitten 70 mit einem Parallelversatz V zur radialen Richtung R. Die Wirkrichtung 70a einer Linearführung 17 kann von der Radialrichtung R verschieden sein. Eine Linearführung 17 kann derart angeordnet sein, dass sich ihre Wirkrichtung 70a parallel zur Radialrichtung R erstreckt. Jede Linearführung 17 kann derart angeordnet sein, dass sich ihre jeweilige Wirkrichtung 70a parallel zur Radialrichtung R erstreckt. Eine Linearführung 17 kann derart angeordnet sein, dass ihre Wirkrichtung 70a parallel zur Radialrichtung R verläuft. Jede Linearführung 17 kann derart angeordnet sein, dass ihre jeweilige Wirkrichtung 70a parallel zur Radialrichtung R verläuft, insbesondere mit einem jeweiligen Parallelversatz V. In der gezeigten Ausführungsform weist ein Schlittenpleuel-Gelenk 65 und ein zugehöriges Schlitten-Werkzeuggelenk 75 einen gemeinsamen Gelenkstift auf.

## Patentansprüche

1. Ein rotativer Bearbeitungskopf (300) zur Bearbeitung von einem Kabel, aufweisend:
eine um eine Rotationsachse (Z) rotierbare Rotorbasis (20),
einen um die Rotationsachse (Z) verlaufenden Kabelbearbeitungsraum (21), in den das zu bearbeitende Kabel ein- oder durchführbar ist,
mehrere erste Werkzeuge (31),
mehrere von den ersten Werkzeugen (31) verschiedenartige zweite Werkzeuge (32),
wobei die ersten Werkzeuge (31) und die zweiten Werkzeuge (32) jeweils relativ zur Rotorbasis (20) in Wirkrichtung jeweiliger Linearführungen (17) bewegbar sind,
ein um die Rotationsachse (Z) relativ zur Rotorbasis (20) in einer Drehbewegung drehbares Stellmittel (50)
einen Verstellmechanismus (200) mit ersten Pleueln (61) und zweiten Pleueln (62), wobei
die ersten Pleuel (61) kinematisch zwischen dem Stellmittel (50) und den jeweiligen ersten Werkzeugen (31) angeordnet sind, und derart ausgebildet und angeordnet sind, um die Drehbewegung des Stellmittels (50) relativ zur Rotorbasis (20) in jeweilige erste Linearbewegungen der ersten Werkzeuge (31) in Wirkrichtung der jeweiligen Linearführungen (17) zu übertragen, und
die zweiten Pleuel (62) kinematisch zwischen dem Stellmittel (50) und den jeweiligen zweiten Werkzeugen (32) angeordnet sind, und derart ausgebildet und angeordnet sind, um die Drehbewegung des Stellmittels (50) relativ zur Rotorbasis (20) in jeweilige zweite Linearbewegungen der zweiten Werkzeuge (32) in Wirkrichtung der jeweiligen Linearführungen (17) zu übertragen,
so dass die ersten Werkzeuge (31) gemäß den jeweiligen ersten Linearbewegungen und gleichzeitig die zweiten Werkzeuge (32) gemäß den jeweiligen zweiten Linearbewegungen durch das Stellmittel (50) bewegbar sind, wenn das Stellmittel (50) die Drehbewegung relativ zur Rotorbasis (20) ausführt.

2. Der rotative Bearbeitungskopf (300) nach Anspruch 1, wobei die ersten Linearbewegungen und die zweiten Linearbewegungen im Wesentlichen radial in Bezug auf die Rotationsachse (Z) verlaufen.

3. Der rotative Bearbeitungskopf (300) nach Anspruch 1 oder 2, wobei das Stellmittel (50) um die Rotationsachse (Z) gegenüber der Rotorbasis (20) um einen Verstellwinkel (φ) drehbar ist, wobei die erste Linearbewegung und die zweite Linearbewegung zumindest in einem ersten Verstellbereich des Verstellwinkels (φ) gegenläufig sind, insbesondere im Wesentlichen radial gegenläufig sind.

4. Der rotative Bearbeitungskopf (300) nach einem der Ansprüche 1 bis 3, wobei jedes der ersten Werkzeuge (31) an einem zugehörigen ersten Schlitten (71) angeordnet ist, wobei das Stellmittel (50) mit jedem ersten Pleuel (61) und dem zugehörigen ersten Schlitten (71) einen jeweiligen ersten Kurbeltrieb ausbildet, und/oder
wobei jedes der zweiten Werkzeuge (32) an einem zugehörigen zweiten Schlitten (72) angeordnet ist, wobei das Stellmittel (50) mit jedem zweiten Pleuel (62) und dem zugehörigen zweiten Schlitten (72) einen jeweiligen zweiten Kurbeltrieb ausbildet.

5. Der rotative Bearbeitungskopf (300) nach Anspruch 4, wobei zumindest eines der ersten Werkzeuge (31) und der zugehörige erste Schlitten (71) als separate Bauteile ausgeführt sind, wobei das erste Werkzeug (31) und der zugehörige erste Schlitten (71) zumindest über ein erstes Schlitten-Werkzeug-Gelenk (76) miteinander verbunden sind, und/oder
wobei zumindest eines der ersten Werkzeuge (31) und der zugehörige ersten Schlitten (71) integral ausgebildet sind, und/oder
wobei zumindest eines der zweiten Werkzeuge (32) und der zugehörige zweite Schlitten (72) als separate Bauteile ausgeführt sind, wobei das zweite Werkzeug (32) und der zugehörige zweite Schlitten (72) über zumindest ein zweites Schlitten-Werkzeug-Gelenk (77) miteinander verbunden sind, und/oder
wobei zumindest eines der zweiten Werkzeuge (32) und der zugehörige zweite Schlitten (72) integral ausgebildet sind.

6. Der rotative Bearbeitungskopf (300) nach einem der Ansprüche 1 bis 5, wobei sich jeder erste Pleuel (61) zwischen einem Kopfende (60a) und einem Fußende (60b) erstreckt,
wobei jeder erste Pleuel (61) an seinem Fußende (60b) mit dem Stellmittel (50) über ein erstes Stellmittel-Pleuel-Gelenk (56) verbunden ist, und/oder
wobei zumindest einer der ersten Pleuel (61) an seinem Kopfende (60a) mit dem zugehörigen ersten Schlitten (71) über ein erstes Schlitten-Pleuel-Gelenk (66) mechanisch verbunden ist, und/oder
wobei zumindest einer der ersten Pleuel (61) an seinem Kopfende (60a) mit dem zugehörigen ersten Werkzeug (31) über ein erstes Werkzeug-Pleuel-Gelenk (68) mechanisch verbunden ist.

7. Der rotative Bearbeitungskopf (300) nach einem der Ansprüche 1 bis 6, wobei sich jeder zweite Pleuel (62) zwischen einem Kopfende (60a) und einem Fußende (60b) erstreckt,
wobei jeder zweite Pleuel (62) an seinem Fußende (60b) mit dem Stellmittel (50) über ein zweites Stellmittel-Pleuel-Gelenk (57) verbunden ist, und/oder
wobei zumindest einer der zweiten Pleuel (62) an seinem Kopfende (60a) mit dem zugehörigen zweiten Schlitten (72) über ein zweites Schlitten-Pleuel-Gelenk (67) mechanisch verbunden ist, und/oder
wobei zumindest einer der zweiten Pleuel (62) an seinem Kopfende (60a) mit dem zugehörigen zweiten Werkzeug (32) über ein zweites Werkzeug-Pleuel-Gelenk (69) mechanisch verbunden ist.

8. Der rotative Bearbeitungskopf (300) nach einem der Ansprüche 6 bis 7, wobei jeder der ersten Pleuel (61) zwischen dem Kopfende (60a) und dem Fußende (60b) einen zentralen Bereich aufweist, wobei sich der erste Pleuel (61) entlang einer Pleuel-Wirklinie (60c) vom Kopfende (60a) zum zentralen Bereich verbreitert und vom zentralen Bereich zum Fußende (60b) verjüngt, und/oder
wobei jeder der zweiten Pleuel (62) zwischen dem Kopfende (60a) und dem Fußende (60b) einen zentralen Bereich aufweist, wobei sich der zweite Pleuel (62) entlang der Pleuel-Wirklinie (60c) vom Kopfende (60a) zum zentralen Bereich verbreitert und vom zentralen Bereich zum Fußende (60b) verjüngt.

9. Der rotative Bearbeitungskopf (300) nach einem der Ansprüche 1 bis 8, wobei die ersten Pleuel (61) und/oder die zweiten Pleuel (62) asymmetrisch bezüglich ihrer jeweiligen Pleuel-Wirklinie (60c) ausgebildet sind, und/oder
wobei die ersten Pleuel (61) als Flachprofile ausgebildet sind, und/oder
wobei die zweiten Pleuel (62) als Flachprofile ausgebildet sind.

10. Der rotative Bearbeitungskopf (300) nach einem der Ansprüche 1 bis 9, wobei jeder erste Pleuel (61) und jeder zweite Pleuel (62) an einer separaten Festlegstelle mit dem Stellmittel (50) gelenkig verbunden ist,
oder
wobei einer der ersten Pleuel (61) und einer der zweiten Pleuel (62) ein Pleuelpaar bilden, welches an einer gemeinsamen Paarfestlegstelle (58) mit dem Stellmittel (50) gelenkig verbunden ist.

11. Der rotative Bearbeitungskopf (300) nach einem der Ansprüche 1 bis 10, wobei die ersten Werkzeuge (31) eine gemeinsame erste Schnittebene haben, und wobei die zweiten Werkzeuge (32) eine gemeinsame zweiten Schnittebene haben, wobei die erste Schnittebene und die zweite Schnittebene vorzugsweise im Wesentlichen parallel zueinander verlaufen oder aufeinander liegen und vorzugsweise im Wesentlichen senkrecht zur Rotationsachse (Z) stehen,
oder
wobei komplementäre Punkte der ersten Werkzeuge (31) und/oder komplementäre Punkte der zweiten Werkzeuge (32) sich jeweils auf einer Kegelfläche um die Rotationsachse bewegen können.

12. Der rotative Bearbeitungskopf (300) nach einem der Ansprüche 6 bis 11, wobei jeder erste Pleuel (61) eine erste Pleuellänge (a1) zwischen dem ersten Stellmittel-Pleuel-Gelenk (56) und dem ersten Schlitten-Pleuel-Gelenk (66) oder zwischen dem ersten Stellmittel-Pleuel-Gelenk (56) und dem ersten Werkzeug-Pleuel-Gelenk (68) aufweist,
und wobei jeder zweite Pleuel (62) eine zweite Pleuellänge (a2) zwischen dem zweiten Stellmittel-Pleuel-Gelenk (57) und dem zweiten Schlitten-Pleuel-Gelenk (67) oder zwischen dem zweiten Stellmittel-Pleuel-Gelenk (57) und dem zweiten Werkzeug-Pleuel-Gelenk (69) aufweist, wobei die ersten Pleuellängen (a1) und die zweiten Pleuellängen (a2) gleich groß sind.

13. Der rotative Bearbeitungskopf (300) nach einem der Ansprüche 6 bis 12, wobei ein erster Teilkreisradius (c1) zwischen der Rotationsachse (Z) und jedem ersten Stellmittel-Pleuel-Gelenk (56) und ein zweiter Teilkreisradius (c2) zwischen der Rotationsachse (Z) und jedem zweiten Stellmittel-Pleuel-Gelenk (57) gleich groß sind, insbesondere
wobei für alle ersten Kurbeltriebe Wirklinien (71c) der ersten Schlitten (71) sich mit den zugehörigen ersten Teilkreisradien (c1) zu den ersten Stellmittel-Pleuel-Gelenken (56) unter einem ersten Stell-Start-Winkel λ1 schneiden und für alle zweiten Kurbeltriebe Wirklinien (72c) der zweiten Schlitten (72) sich mit den zugehörigen zweiten Teilkreisradien (c2) zu den zweiten Stellmittel-Pleuel-Gelenken (57) unter einem zweiten Stell-Start-Winkel λ2 schneiden, wobei der erste Stell-Start-Winkel λ1 und der zweite Stell-Start-Winkel λ2 vorzugsweise in einer Neutralstellung betragsgleich und einander entgegengesetzt sind.

14. Eine Kabelbearbeitungsvorrichtung (400), wobei die Kabelbearbeitungsvorrichtung (400) einen rotativen Bearbeitungskopf (300) nach einem der Ansprüche 1 bis 13, und eine Antriebeinrichtung zum Antreiben der Rotorbasis (20) und/oder des Stellmittels (50) aufweist.

15. Ein Verfahren zum Bearbeiten eines Kabels (80), insbesondere zum Perforieren, Einschneiden und/oder Durchschneiden zumindest einer Schicht (84) eines mehrschichtigen Kabels (80), aufweisend die Schritte:
- Bereitstellen des Bearbeitungskopfes (300) nach einem der Ansprüche 1 bis 13 und/oder der Kabelbearbeitungsvorrichtung (400) nach Anspruch 14,
- Einführen des Kabels (80) in den Kabelbearbeitungsraum (21),
- einen Stellschritt, in dem das Stellmittel (50) um die Rotationsachse (Z) relativ zur Rotorbasis (20) verdreht wird, so dass über den Verstellmechanismus (200) die ersten Werkzeuge (31) in den jeweiligen ersten Linearbewegungen und gleichzeitig die zweiten Werkzeuge (32) in den jeweiligen zweiten Linearbewegungen durch das Stellmittel (50) bewegt werden.
